(19) Europäisches Patentamt
European Patent Office
Office européen des brevets

(11) **EP 3 685 924 B1**

(12) **EUROPÄISCHE PATENTSCHRIFT**

(45) Veröffentlichungstag und Bekanntmachung des Hinweises auf die Patenterteilung:
**22.12.2021 Patentblatt 2021/51**

(51) Int Cl.:
*B05B 7/14* (2006.01)     *B05B 12/00* (2018.01)
*B05B 12/08* (2006.01)     *F16K 7/07* (2006.01)
*F16K 37/00* (2006.01)

(21) Anmeldenummer: **19153649.9**

(22) Anmeldetag: **25.01.2019**

(54) **PULVERFÖRDEREINRICHTUNG FÜR BESCHICHTUNGSPULVER UND PULVERBESCHICHTUNGSANLAGE MIT EINER PULVERFÖRDEREINRICHTUNG**

POWDER FEEDING DEVICE FOR COATING POWDER AND POWDER COATING INSTALLATION WITH A POWDER FEEDING DEVICE

DISPOSITIF DE TRANSPORT DE POUDRE DE REVÊTEMENT ET INSTALLATION DE REVÊTEMENT PAR POUDRE DOTÉE D'UN DISPOSITIF DE TRANSPORT DE POUDRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.07.2020 Patentblatt 2020/31**

(73) Patentinhaber: **WAGNER INTERNATIONAL AG 9450 Altstätten (CH)**

(72) Erfinder:
• **Seitz, Kurt**
  **9443 Widnau (CH)**
• **Untersee, Beat**
  **9450 Altstätten (CH)**
• **Luzi, Kevin**
  **9450 Altstätten (CH)**
• **Bischofberger, Urban**
  **9442 Berneck (CH)**

(74) Vertreter: **Nückel, Thomas**
  **Patentanwaltskanzlei Nückel**
  **Oberdorfstrasse 16**
  **8820 Wädenswil (CH)**

(56) Entgegenhaltungen:
**EP-A1- 0 297 463     EP-A1- 2 962 766**
**EP-A1- 3 162 448     EP-A1- 3 238 832**
**GB-A- 2 512 026**

EP 3 685 924 B1

## Beschreibung

### Technisches Gebiet

Die Erfindung betrifft eine Pulverfördereinrichtung für Beschichtungspulver und eine Pulverbeschichtungsanlage mit einer Pulverfördereinrichtung.

### Stand der Technik

Aus dem Stand der Technik EP 3 238 832 A1 ist eine Pulverfördervorrichtung zum Fördern von Beschichtungspulver zu einem Pulverapplikator bekannt. Die Pulverfördervorrichtung umfasst einen unter Druck setzbaren Arbeitsbehälter, der einen Pulvereinlass und einen Pulverauslass umfasst, wobei der Pulverauslass mit einem Pulverauslassventil verbunden ist. Darüber hinaus ist eine Pulverleitung vorgesehen, die eingangsseitig mit dem Pulverauslassventil verbunden ist, und die eingangsseitig einen Einlass für Transportluft aufweist. Die Pulverleitung ist ausgangsseitig mit einem Pulverapplikator verbindbar. Zudem ist eine Steuerung vorgesehen, die zu fördernde Pulvermenge steuert, indem sie das Pulverauslassventil wiederholt öffnet und schliesst. Es hat sich gezeigt, dass bei der Fördervorrichtung die tatsächlich geförderte Pulvermenge von Fall zu Fall von der gewünschten zu fördernden Pulvermenge abweicht. Dies führt unter Umständen zu unerwünschten Schwankungen bei der Pulverförderung.

### Darstellung der Erfindung

Eine Aufgabe der Erfindung ist es, eine Pulverfördereinrichtung für Beschichtungspulver und eine Pulverbeschichtungsanlage anzugeben, bei dem beziehungsweise bei der die pro Zeiteinheit tatsächlich geförderte Pulvermenge noch exakter einem vorgegebenen Sollwert folgt.

Vorteilhafter Weise lassen sich mit der Erfindung die Abweichungen zwischen dem Sollwert für die Fördermenge und der tatsächlich geförderten Pulvermenge noch weiter reduzieren.

Die Aufgabe wird durch eine Pulverfördereinrichtung mit den in Patentanspruch 1 angegebenen Merkmalen gelöst.

Die erfindungsgemässe Pulverfördereinrichtung für Beschichtungspulver umfasst einen Pulverförderer mit einem Pulverauslasskanal und ein Pulverauslassventil, um den Pulverauslasskanal zu öffnen oder zu verschliessen. Zudem sind ein Sollwertgeber zur Vorgabe einer Soll-Öffnungsdauer des Pulverauslassventils und ein Sensor zur Ermittlung der Ist-Öffnungsdauer des Pulverauslassventils vorgesehen. Die Pulverfördereinrichtung umfasst darüber hinaus eine Auswerteeinheit zur Ermittlung der Abweichung zwischen der Soll-Öffnungsdauer und der Ist-Öffnungsdauer.

Die Aufgabe wird zudem durch eine Pulverbeschichtungsanlage mit den in Patentanspruch 14 angegebenen Merkmalen gelöst.

Die erfindungsgemässe Pulverbeschichtungsanlage mit der oben beschriebenen Pulverfördereinrichtung umfasst einen Pulverapplikator, der über eine Pulverleitung mit der Pulverfördereinrichtung verbunden ist.

Vorteilhafte Weiterbildungen der Erfindung ergeben sich aus den in den abhängigen Patentansprüchen angegebenen Merkmalen.

Bei einer Ausführungsform der erfindungsgemässen Pulverfördereinrichtung ist der Sensor in unmittelbarer Nähe zum Pulverauslassventil angeordnet. Dies reduziert die Gefahr, dass durch den Sensor Störgrössen erfasst werden, die nicht auf das Auslassventil zurückzuführen sind. Zudem kann dadurch die Trägheit des Messsystems reduziert werden.

Vorzugsweise befindet sich der Sensor auf der Auslassseite des Pulverauslassventils.

Bei einer anderen Ausführungsform der erfindungsgemässen Pulverfördereinrichtung ist der Sensor als Influenz-Sensor ausgebildet. Dies hat den Vorteil, dass die Messung berührungslos erfolgen kann und der Pulverstrom im Pulverkanal durch die Messung nicht beeinflusst wird.

Bei einer weiteren Ausführungsform der erfindungsgemässen Pulverfördereinrichtung ist der Sensor als optischer Sensor oder als Dichte-Sensor oder als Mikrowellensensor ausgebildet. Auch diese Lösung hat den Vorteil, dass die Messung berührungslos erfolgen kann und der Pulverstrom im Pulverkanal durch die Messung nicht beeinflusst wird.

Bei einer Weiterbildung der erfindungsgemässen Pulverfördereinrichtung ist eine Regeleinheit vorgesehen, die dazu dient die Abweichung zwischen der Soll-Öffnungsdauer und der Ist-Öffnungsdauer zu minimieren. Damit kann vorteilhafterweise der Istwert dem Sollwert automatisch nachgeführt werden. Dies erhöht die Fördergenauigkeit noch weiter.

Bei einer zusätzlichen Weiterbildung der erfindungsgemässen Pulverfördereinrichtung weist der Pulverförderer einen weiteren Pulverauslasskanal und ein weiteres Pulverauslassventil auf. Das weitere Pulverauslassventil ist vorgesehen, um den weiteren Pulverauslasskanal zu öffnen oder zu verschliessen. Darüber hinaus ist ein weiterer Sensor zur Ermittlung der Ist-Öffnungsdauer des weiteren Pulverauslassventils vorgesehen. Damit kann vorteilhafterweise mehr Pulver gefördert und gleichzeitig die tatsächlich geförderte Pulvermenge exakt eingehalten werden.

Die Auswerteeinheit der erfindungsgemässen Pulverfördereinrichtung kann so ausgebildet und betreibbar sein, dass sie auch zur Ermittlung der Abweichung zwischen der Soll-Öffnungsdauer des weiteren Pulverauslassventils und der Ist-Öffnungsdauer des weiteren Pulverauslassventils dient. Damit lässt sich die Fördergenauigkeit weiter optimieren.

Bei der erfindungsgemässen Pulverfördereinrichtung kann ein weiterer Sollwertgeber zur Vorgabe einer Soll-Öffnungsdauer des weiteren Pulverauslassventils vorgesehen sein. Damit lassen sich unterschiedliche Fördermengen vorgeben. Die Pulverfördereinrichtung kann so zum Beispiel einen ersten Pulverapplikator mit einer ersten Pulvermenge und einen zweiten Pulverapplikator mit einer zweiten Pulvermenge versorgen.

Vorteilhafter Weise kann die Auswerteeinheit der erfindungsgemässen Pulverfördereinrichtung zudem so ausgebildet und betreibbar sein, dass mit ihr die Ist-Öffnungsdauer des Pulverauslassventils mit der Ist-Öffnungsdauer des weiteren Pulverauslassventils vergleichbar ist. Vorteilhafterweise kann damit die Aussagegenauigkeit weiter erhöht werden.

Bei der erfindungsgemässen Pulverfördereinrichtung kann vorgesehen sein, dass der Pulverförderer einen unter Druck setzbaren Pulverarbeitsbehälter aufweist.

Bei der erfindungsgemässen Pulverfördereinrichtung kann zudem vorgesehen sein, dass der Pulverförderer einen Injektor umfasst.

Bei der erfindungsgemässen Pulverfördereinrichtung kann des Weiteren vorgesehen sein, dass der Pulverförderer eine Dichtstromförderpumpe umfasst.

Schliesslich kann das das Pulverauslassventil bei der erfindungsgemässen Pulverfördereinrichtung als Schlauchquetsche ausgebildet sein.

**Kurze Beschreibung der Zeichnungen**

Im Folgenden wird die Erfindung mit mehreren Ausführungsbeispielen anhand von mehreren Figuren weiter erläutert.

Figur 1     zeigt in einem Blockdiagramm eine mögliche Ausführungsform einer Pulverbeschichtungsanlage mit der erfindungsgemässen Pulverfördereinrichtung.

Figur 2     zeigt in einer Prinzipdarstellung eine mögliche Ausführungsform der erfindungsgemässen Pulverfördereinrichtung.

Figur 3a     zeigt in einem Diagramm den zeitlichen Verlauf des Steuersignals für das Pulverauslassventil.

Figur 3b     zeigt in einem Diagramm den zeitlichen Verlauf des eingespeisten Transportluftdrucks.

Figur 3c     zeigt in einem Diagramm die pro Zeit geförderte Pulvermenge.

Figur 4     zeigt den prinzipiellen Aufbau einer möglichen Ausführungsform des in der Pulverfördereinrichtung eingesetzten Sensors und dessen Anordnung in der Pulverfördereinrichtung.

Figur 5     zeigt beispielhaft einen Verlauf des von dem Sensor erzeugten Messsignals.

Figur 6     zeigt beispielhaft einen zweiten Verlauf des von dem Sensor erzeugten Messsignals.

Figur 7     zeigt beispielhaft einen dritten Verlauf des von dem Sensor erzeugten Messsignals.

Figur 8     zeigt eine mögliche Ausführungsform der erfindungsgemässen Pulverfördereinrichtung in einer dreidimensionalen Ansicht.

Figur 9     zeigt die erfindungsgemässe Pulverfördereinrichtung im Längsschnitt.

Figur 10     zeigt eine mögliche Ausführungsform eines Pulverauslassventils mit Sensor im Schnitt.

Figur 11     zeigt den zeitlichen Verlauf der geförderten Pulvermenge und des Steuersignals.

**Wege zur Ausführung der Erfindung**

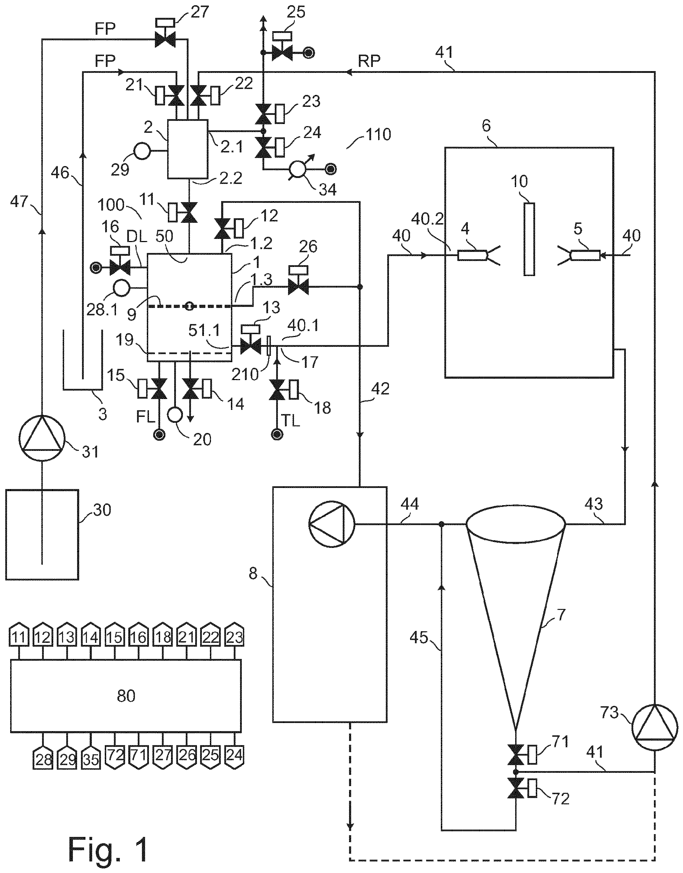

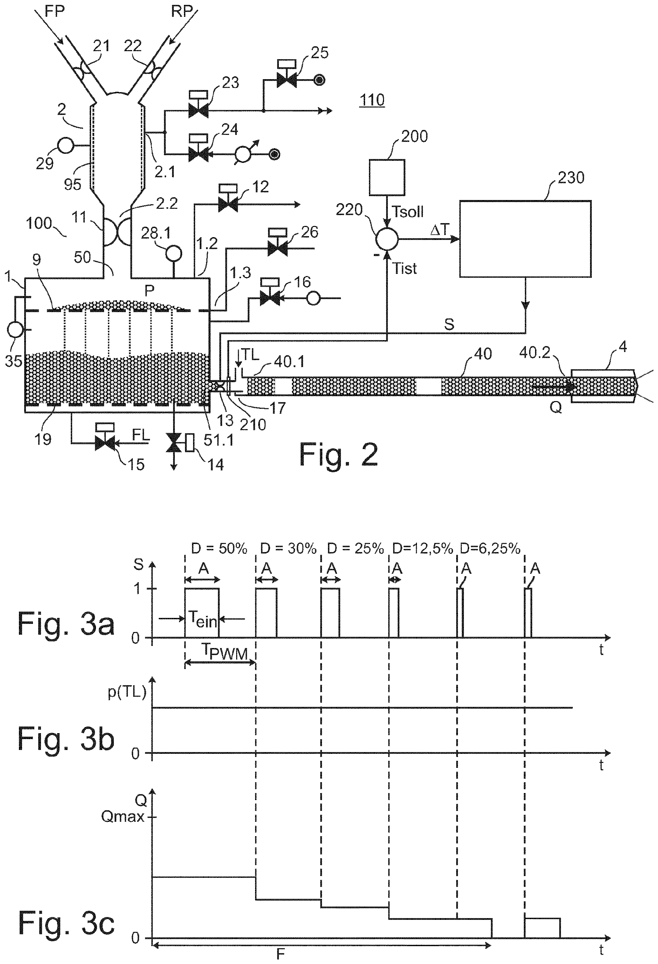

Figur 1 zeigt in einem Blockdiagramm eine mögliche Ausführungsform einer Pulverbeschichtungsanlage mit einem möglichen Pulverförderer 100. In Figur 2 ist der prinzipielle Aufbau einer möglichen Ausführungsform der erfindungsgemässen Pulverfördereinrichtung 110 dargestellt. Die Pulverfördereinrichtung 110 zum Fördern von Beschichtungspulver zu einem Pulverapplikator 4 umfasst einen Arbeitsbehälter 1. Dieser ist druckdicht ausgebildet, damit er unter Druck gesetzt werden kann. Der maximale Arbeitsdruck im Arbeits-behälter 1 liegt vorzugsweise unter 0,5 bar, weil dann die Europäische Druckgeräterichtlinie 97/23/EG beziehungsweise Pressure Equipment Directive 97/23/EG nicht zur Anwendung kommen muss und folglich geringere technische Anforderungen an den Aufbau des Arbeitsbehälters 1 gestellt werden.

In einer Ausführungsform umfasst der Arbeitsbehälter 1 einen Pulvereinlass 50, der auch kurzum als Einlass bezeichnet wird, und einen Pulverauslass 51.1, der auch kurzum als Auslass bezeichnet wird. Der Pulverauslass 51.1 ist mit einem Pulverauslassventil 13 verbunden. Darüber hinaus ist eine Pulverleitung 40 vorgesehen, die an ihrem eingangsseitigen Endbereich 40.1 mit dem Pulverauslassventil 13 verbunden ist. Im Folgenden bezeichnet der Begriff eingangsseitig den eingangsseitigen Endbereich 40.1 der Pulverleitung 40, der sich auf der stromaufwärtigen Seite der Pulverleitung 40 befindet.

Die Pulverleitung 40 weist eingangsseitig zusätzlich zum Anschluss für den Auslass des Pulverauslassventils 13 auch einen Transportluftanschluss 17 mit einem Einlass 17.1 für Transportluft TL auf. In Figur 1 ist die Pulverleitung 40 ausgangsseitig mit einem Pulverapplikator 4 verbunden. Im Folgenden bezeichnet der Begriff ausgangsseitig den ausgangsseitigen Endbereich 40.2 der Pulverleitung 40, der sich auf der stromabwärtigen Seite der Pulverleitung 40 befindet.

In der Nähe des Pulverauslassventils 13 befindet sich ein Sensor 210. Vorzugsweise ist der Sensor 210 in unmittelbarer Nähe zum Pulverauslassventil 13 angeordnet. Auf den Sensor 210 wird später noch näher eingegangen.

Der Pulverauslass 51.1 befindet sich vorzugsweise im unteren Bereich des Arbeitsbehälters 1. Dies hat den Vorteil, dass das gesamte Pulver ohne weiteres aus dem Arbeitsbehälter 1 heraustransportiert werden kann. Im unteren Bereich des Arbeitsbehälters 1 befindet sich auch eine Fluidisiereinrichtung 19, mit der das im Arbeitsbehälter 1 befindliche Pulver fluidisiert werden kann. Die Fluidisiereinrichtung 19 weist eine vorzugsweise horizontal verlaufende Trennwand aus einem porösen Material auf, das zum Beispiel ein semipermeables, für Luft durchlässiges Material sein kann. Das oberhalb der porösen Trennwand befindliche Pulver wird mit von unten durch die poröse Trennwand hindurchgeleiteter Fluidisierluft FL aufgewirbelt und in einen Schwebezustand versetzt. Dieser Vorgang wird als fluidisieren bezeichnet. Das oberhalb der Fluidisiereinrichtung 19 befindliche fluidisierte Pulver kann dann aus dem Arbeitsbehälter 1 durch den Pulverauslass 51.1 heraustransportiert werden. Um die Fluidisierluft FL steuern zu können, ist ein Ventil 15 vorgesehen. Das Ventil 15 kann zum Beispiel als Luftmengenregel-Ventil ausgebildet sein. Zudem kann eine Rüttelvorrichtung 20, die zum Beispiel einen Rüttelmotor aufweist, am Arbeitsbehälter 1 montiert sein, um die Erzeugung eines homogenen Pulver-Luft-Gemisches zu unterstützen.

Ebenfalls im unteren Bereich des Arbeitsbehälters 1 kann ein Anschluss für ein weiteres Ventil 14 vorgesehen sein. Über das Ventil 14 kann das Restpulver, das nicht bereits über den Auslass 51.1 abtransportiert wurde, aus dem Arbeitsbehälter 1 entnommen werden.

Des Weiteren kann im Arbeitsbehälter 1 ein Sieb 9 angeordnet sein, das vorzugsweise als Ultraschall-Sieb ausgebildet ist. Das Sieb 9 teilt den Innenraum des Arbeitsbehälters 1 in eine obere Kammer und in eine untere Kammer. Mit Hilfe des Siebs 9 wird das Pulver gesiebt, das über den Pulvereinlass 50 in die obere Kammer des Arbeitsbehälter 1 gelangt ist. Dabei werden Pulverklumpen und Verunreinigungen zurückgehalten. Das gesiebte und zum Abtransport bereite Pulver befindet sich in der Kammer unterhalb des Siebs 9. Um das Sieb 9 reinigen zu können, kann es aus der Horizontale herausgeschwenkt und in eine Schräglage gebracht werden, sodass das auf dem Sieb 9 liegende Restpulver und/oder das zurückgehaltene Material vom Sieb 9 herunterrutschen kann.

Über einen Reinigungsanschluss 1.3 kann Pulver vom Sieb 9 abgesaugt werden. Der Reinigungsanschluss 1.3 ist über das Ventil 26 und eine Leitung 42 mit dem Nachfilter 8 verbunden. Um das Sieb 9 zu reinigen, wird das Ventil 26 geöffnet. Der Arbeitsbehälter 1 wird dabei weiterhin mit Druckluft versorgt, um den Überdruck im Arbeitsbehälter 1 aufrecht zu erhalten. Der angesammelte Schmutz wird nun durch den weiterhin im Arbeitsbehälter 1 herrschenden Überdruck vom Sieb 9 durch die Leitung 42 zum Nachfilter 8 geblasen. Für die Zeit, in der das Ventil 26 geöffnet ist, kann es zu einem reduzierten Druck im Arbeitsbehälter 1 kommen. Die Reinigung des Siebs 9 findet deshalb vorzugsweise während einer Beschichtungspause statt, also in der Zeit, in der kein Pulver gefördert wird. Das Ventil 26 und die Leitung 42 dienen also zum Schmutzaustrag.

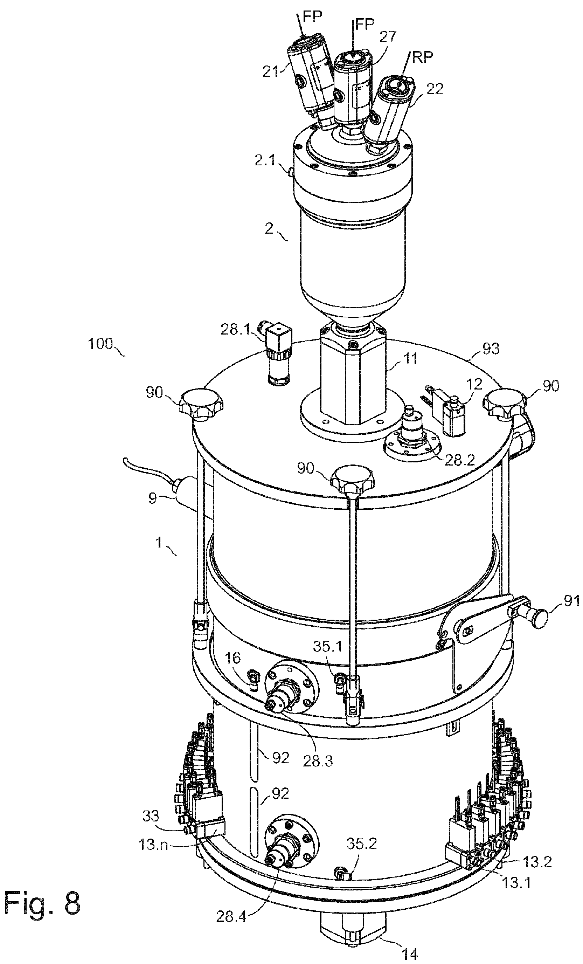

Am Arbeitsbehälter 1 kann zudem ein Druckluftanschluss vorgesehen sein, der über ein Ventil 16 mit einer Druckluftquelle verbunden ist. Wenn das Ventil 16 geöffnet ist, kann Druckluft DL in den Arbeitsbehälter 1 strömen. Damit kann der Arbeitsbehälter 1 unter Druck gesetzt und der gewünschte Arbeitsdruck im Arbeitsbehälter 1 eingestellt werden. Stattdessen kann der gewünschte Arbeitsdruck im Arbeitsbehälter 1 auch über die zugeführte Fluidisierluft FL und über die Druckluft DL erzeugt werden. In der Regel reicht die Fluidisierluft FL aus, um den gewünschten Arbeitsdruck zu erzeugen. Wenn jedoch zum Beispiel sehr viele Pulverauslassventile 13 geöffnet sind, könnte es sein, dass die Fluidisierluft FL allein nicht ausreicht, um den Arbeitsdruck aufrecht zu erhalten. In diesem Fall wird zusätzlich die Druckluft DL benutzt, um den Arbeitsdruck aufrecht zu erhalten und um gegebenenfalls Druckschwankungen im Arbeitsbehälter 1 auszugleichen. Die Druckluft DL kann unabhängig von der Fluidisierluft FL zugeführt werden. Um ein gut fluidisiertes Pulver-Luft-Gemisch zu erhalten, ist es von Vorteil, wenn die Fluidisierluft FL auf einen bestimmten Wert eingestellt ist. Der Druckluftanschluss für die Druckluft DL kann zum Beispiel, wie in Figur 1 angedeutet, im oberen Bereich des Arbeitsbehälters 1 angeordnet sein. Der Druckluftanschluss kann auch einer Stelle des Arbeitsbehälters 1 angebracht sein, die es ermöglicht, dass mit der Druckluft DL die Sichtfenster 92 (Fig. 8) vom anhafteten Pulver freigeblasen werden können. Die Druckluft DL kann auch verwendet werden, um Druckluftverluste, die durch kleinere Leckagen entstehen, zu kompensieren.

Darüber hinaus kann der Arbeitsbehälter 1 einen Entlüftungsanschluss 1.2 aufweisen, der mit einem Ventil 12 verbunden ist, das als Entlüftungsventil dient. Über das Ventil 12 kann der Entlüftungsanschluss 1.2 zum Beispiel mit einem Nachfilter 8 verbunden sein. Der Entlüftungsanschluss 1.2 und das Ventil 12 können auch dazu dienen sicherzustellen, dass der Druck im Arbeitsbehälter 1 einen bestimmten maximalen Druck nicht überschreitet. Zudem können der Entlüftungsanschluss 1.2 und das Ventil 12 benutzt werden, um den Arbeitsdruck im Arbeitsbehälter 1 konstant zu halten.

Der Pulvereinlass 50 befindet sich vorzugsweise im oberen Bereich des Arbeitsbehälters 1. Er kann zum Beispiel im Deckel des Arbeitsbehälters 1 angeordnet sein. Der Pulvereinlass 50 ist über ein Pulverventil 11, das beispielsweise als Quetsche ausgebildet ist, mit dem Pulverauslass 2.2 eines Zwischenbehälters 2 verbunden. Der Zwischenbehälter 2 ist in der Regel oberhalb des Arbeitsbehälters 1 angeordnet. Auf diese Weise kann die Schwerkraft ausgenutzt werden, um im Zwischenbehälter 2 befindliches Pulver nach unten in den Arbeitsbehälter 1 zu transportieren.

Bei einer Ausführungsform des Arbeitsbehälters 1 befindet sich der Pulvereinlass 50 in der Mitte des Deckels des Arbeitsbehälters 1, wie dies in Figur 2 angedeutet ist. Dies hat den Vorteil, dass das Pulver auch auf die Mitte des Siebes 9 fällt, sodass es sich besser über das gesamte Sieb 9 verteilt. Der Pulvereinlass 50 kann sich stattdessen auch seitlich am Arbeitsbehälter 1 oberhalb des Siebs 9 befinden.

Der Zwischenbehälter 2 kann auch so neben dem Arbeitsbehälter 1 angeordnet sein, dass sich der Pulverauslass 2.2 des Zwischenbehälters 2 und der Pulvereinlass 50 des Arbeitsbehälters 1 noch oberhalb des Siebes 9 befinden. Auch hier kann die Schwerkraft ausgenutzt werden, um im Zwischenbehälter 2 befindliches Pulver nach unten in den Arbeitsbehälter 1 zu transportieren.

In der in Figur 1 gezeigten Ausführungsform weist der Zwischenbehälter 2 eingangsseitig einen Pulvereinlass und ein Pulvereinlassventil 21 auf, über das Frischpulver FP in den Zwischenbehälter 2 gesaugt oder gepumpt werden kann. Zudem weist der Zwischenbehälter 2 eingangsseitig einen weiteren Pulvereinlass und ein Pulvereinlassventil 22 auf, über das rezykliertes Pulver RP in den Zwischenbehälter 2 gesaugt werden kann. Die beiden Pulvereinlassventile 21 und 22 können als Quetschen ausgebildet sein. Es ist aber auch möglich am Zwischenbehälter 2 nur einen Pulvereinlass und ein Pulvereinlassventil vorzusehen, über das dann entweder Frischpulver FP oder rezykliertes Pulver RP angesaugt oder gepumpt werden kann.

Die Versorgung des Zwischenbehälters 2 kann zum Beispiel über einen Pulvervorratsbehälter 3 und eine Pulverleitung 46 erfolgen. Stattdessen kann der Zwischenbehälter 2 auch über einen Pulvervorratsbehälter 30, eine Pulverpumpe 31 und eine Pulverleitung 47 mit Frischpulver FP versorgt werden.

Anders als in Figur 1 dargestellt, kann sich im Pulvervorratsbehälter 3 oder im Pulvervorratsbehälter 30 oder auch in beiden Behältern ein Gemisch aus Frischpulver FP und rezykliertem Pulver RP befinden. Damit kann der Zwischenbehälter 2 über die Behälter 3 beziehungsweise 30 auch mit einem Gemisch aus rezykliertem Pulver RP und Frischpulver RP versorgt werden.

Häufig ist der Pulvervorratsbehälter 30 ein sogenannter Bigbag, der auch als Flexible Intermediate Bulk Container oder kurz FIBC bezeichnet wird. Der Pulvervorratsbehälter 30 beinhaltet in der Regel grössere Pulvermengen als der Pulvervorratsbehälter 3. Auch steht der Pulvervorratsbehälter 30 in der Regel weiter vom Zwischenbehälter 2 entfernt als der Pulvervorratsbehälter 3. So kann der Pulvervorratsbehälter 30 in einem Abstand von zum Beispiel 30m zum Zwischenbehälter 2 stehen, wohingegen der Pulvervorratsbehälter 3 zum Beispiel 5m vom Zwischenbehälter 2 entfernt steht.

Beim Pulvervorratsbehälter 3 wird das Pulver über den im Zwischenbehälter 2 herrschenden Unterdruck in den Zwischenbehälter 2 gefördert. Es ist damit keine weitere Pulverfördervorrichtung notwendig und daher kostengünstig.

Wenn der Pulvervorratsbehälter 30, zum Beispiel in Form eines Bigbags, verwendet wird, werden in der Regel auch grössere Pulvermengen gefördert. Hierfür ist es von Vorteil, wenn eine zusätzliche Pulverfördervorrichtung wie zum Beispiel die Pulverpumpe 31 verwendet wird. Hier hilft der herrschende Unterdruck die Luft aus dem Zwischenbehälter 2 zu entfernen. Die überschüssige Luft im Zwischenbehälter 2 kann über die Öffnung 2.1 abgelassen werden. Somit entsteht kein Staudruck im Zwischenbehälter 2.

Es kann auch von Vorteil sein, wenn mehrere Zwischenbehälter 2 vorhanden sind, über die der Arbeitsbehälter 1 mit Pulver versorgt wird. Die Zwischenbehälter 2 können oberhalb vom Arbeitsbehälter 1 montiert sein. Bei der Verwendung von zwei Zwischenbehältern 2 können diese zum Beispiel phasenversetzt betrieben werden; während der eine Pulver ansaugt, also in der Ansaugphase arbeitet, transportiert der andere, der in der Auslassphase arbeitet, das Pulver in den Arbeitsbehälter 1. Auf diese Weise wird der Arbeitsbehälter 1 kontinuierlich mit Pulver befüllt. Damit lassen sich grosse Pulvermengen in den Arbeitsbehälter 1 fördern.

Der Zwischenbehälter 2 weist einen Anschluss 2.1 auf, über den der Zwischenbehälter 2 mit Druckluft beaufschlagt werden kann. Der Anschluss 2.1 ist dazu über ein Ventil 24 mit einer Druckluftquelle verbindbar. Das Ventil 24 bildet mit der Druckluftquelle eine steuerbare Druckluftquelle. Ein Druckregelventil 34, das zwischen der Druckluftquelle und dem Ventil 24 angeordnet sein kann, kann Teil der steuerbaren Druckluftquelle sein.

Über denselben Anschluss 2.1 kann die Druckluft auch aus dem Zwischenbehälter 2 abgelassen werden. Dazu ist der Anschluss 2.1 über ein Ventil 23 mit der Umgebung verbindbar. Über den Anschluss 2.1 kann die Druckluft aber auch aus dem Zwischenbehälter 2 abgesaugt und ein Unterdruck erzeugt werden. Dazu ist zusätzlich ein Vakuumventil 25 vorgesehen. Wenn das Ventil 23 geöffnet ist, liegt am Anschluss 2.1 ein Unterdruck an. Die eigentliche Unterdruckerzeugung kann mit einer Venturi-Pumpe erfolgen.

Grundsätzlich können die im Blockdiagramm gemäss Figur 1 dargestellten Druckluftquellen geregelte Druckluftquellen sein, die einen konstanten Druck oder eine konstante Luftmenge erzeugen.

Mittels einer Steuereinheit 80, die im Folgenden auch als Steuerung bezeichnet wird, sind sämtliche Ventile 11 bis 16, 18 und 21 bis 26 steuerbar. Bei Bedarf können mit der Steuerung 80 auch die Ventile 71 und 72 angesteuert werden. Die Steuereinheit 80 kann sowohl zum Steuern als auch zum Regeln benutzt werden.

Im Folgenden wird die Betriebsweise des Zwischenbehälters 2 weiter erläutert. Es wird angenommen, dass der Zwischenbehälter 2 anfänglich frei von Pulver ist. In einem ersten Schritt werden die Ventile 11, 21, 22, 24 und 27 geschlossen, sodass weder Pulver in den Zwischenbehälter 2 gelangt, noch dass Pulver aus dem Zwischenbehälter 2 heraustransportiert wird. Nun werden das Ventil 23 und das Vakuumventil 25 geöffnet, um im Zwischenbehälter 2 einen Unterdruck zu erzeugen. Sobald das Ventil 21 beziehungsweise 27 für Frischpulver FP oder das Ventil 22 für rezykliertes Pulver RP geöffnet wird, wird Pulver in den Zwischenbehälter 2 gesaugt. Es braucht nicht abgewartet zu werden bis ein Unterdruck im Zwischenbehälter 2 aufgebaut ist, sondern das Pulvereinlassventil 21, 22 beziehungsweise 27 kann bereits vorher geöffnet werden. Wenn sich im Zwischenbehälter 2 ausreichend Pulver angesammelt hat, wird das Ventil 21 beziehungsweise 27 für Frischpulver FP beziehungsweise das Ventil 22 für rezykliertes Pulver RP wieder geschlossen. Hierfür kann das Ventil 21, 22 beziehungsweise 27 für eine bestimmte Zeitdauer geöffnet sein, zum Beispiel für 6 Sekunden. Anschliessend wird das Auslassventil 11 geöffnet, sodass das Pulver aus dem Zwischenbehälter 2 heraus gelangen kann. Dies kann unter Ausnutzung der Schwerkraft geschehen. Um den Pulvertransport aus dem Zwischenbehälter 2 zu unterstützen, kann über den Anschluss 2.1 Druckluft in den Zwischenbehälter 2 geblasen werden. Dazu wird das Ventil 24 geöffnet. Da der Arbeitsbehälter 1 während des Förderbetriebs dauerhaft unter Druck steht, ist es von Vorteil, wenn der Druck im Zwischenbehälter 2 grösser oder zumindest genauso gross ist wie der Druck im Arbeitsbehälter 1. Zum Einstellen des Drucks kann ein Druckregelventil 34 verwendet werden. Sobald das Pulver aus dem Zwischenbehälter 2 herausgelangt ist, werden die Ventile 11 und 24 wieder geschlossen. Anschliessend kann der Zwischenbehälter 2 erneut auf die oben beschriebene Weise mit Pulver befüllt werden.

Der Druck im Zwischenbehälter 2 kann auch direkt im Zwischenbehälter 2 gemessen werden. Dadurch wird der tatsächlich im Zwischenbehälter 2 herrschende Ist-Druck erfasst. Mittels einer entsprechenden Druckregelung, die zum Beispiel in der Steuerung 80 implementiert sein kann, kann nun sichergestellt werden, dass der Ist-Druck im Zwischenbehälter 2 tatsächlich dem gewünschten Soll-Druck entspricht. Wenn der Druck im Zwischenbehälter 2 gleich gross ist wie der Druck im Arbeitsbehälter 1, entsteht beim Öffnen des Ventils 11 kein Druckabfall im Arbeitsbehälter 1. Dadurch wird auch während der Zeit, in der der Arbeitsbehälter 1 mit Pulver befüllt wird, eine gleichmässige Pulverförderung zum Pulverapplikator 4 beziehungsweise zu den Pulverapplikatoren gewährleistet.

Im Folgenden wird die Betriebsweise des Arbeitsbehälters 1 weiter erläutert. Sobald das Pulverventil 11 geöffnet ist, gelangt das Pulver aus dem Zwischenbehälter 2 heraus und in den Arbeitsbehälter 1. Das Pulver fällt auf das Sieb 9, wird gesiebt und rieselt von dort auf die Fluidisiereinheit 19. Um das Pulver aus dem Arbeitsbehälter 1 heraus zum Pulverapplikator 4 zu transportieren, wird das Ventil 18 geöffnet, sodass Transportluft TL in die Pulverleitung 40 strömt. Dabei ist es von Vorteil, wenn das Ventil 18 dauerhaft geöffnet ist, sodass die Transportluft TL kontinuierlich in die Pulverleitung 40 strömen kann. Sobald das Pulverauslassventil 13 geöffnet wird, sorgt der im Arbeitsbehälter 1 herrschende Überdruck dafür, dass das Pulver aus dem Arbeitsbehälter 1 heraus und über die Pulverleitung 40 zum Pulverapplikator 4 gefördert wird. Dieser Zustand wird auch als Pulver-Auslassphase A am Arbeitsbehälter 1 bezeichnet. Während das Pulver aus dem Arbeitsbehälter 1 herausgefördert wird, ist das Ventil 14 geschlossen. Wenn es während der Auslassphase A allerdings zu einer Störung im Arbeitsbehälter 1 kommt, beispielsweise wenn der Druck im Arbeitsbehälter 1 über ein bestimmtes Mass steigt, können das Ventil 12 und/oder die Ventile 11 und 22 geöffnet werden.

Um die pro Zeiteinheit zu fördernde Pulvermenge Q einzustellen, ist vorgesehen, das Pulverauslassventil 13 zeitweilig zu schliessen beziehungsweise für eine bestimmte Zeitdauer zu öffnen. Wie lange das Auslassventil 13 geöffnet beziehungsweise geschlossen bleibt, kann durch eine Regeleinheit 230 vorgegeben werden (Fig. 2). Die Regeleinheit 230 kann zusammen mit der Steuereinheit 80 in einem gemeinsamen Gehäuse untergebracht sein.

Die Regeleinheit 230 kann dazu beispielsweise ein Steuersignal S in Form eines Pulses an den Steuereingang des Auslassventils 13 anlegen. Das Steuersignal S kann ein elektrisches Signal oder auch ein Druckluft-Signal sein. In einer explosionsgefährdeten Umgebung kann es von Vorteil sein, als Steuersignal S ein Druckluft-Signal zu benutzen.

Die Regeleinheit 230 kann zum Beispiel ein pulsweitenmoduliertes Steuersignal S erzeugen, das zwischen zwei Werten (Auf oder Zu beziehungsweise 0 oder 1) wechselt. Dabei wird bei konstanter Frequenz F = 1/TPWM der Tastgrad Tein/TPWM des Steuerpulses moduliert. Hierbei ist TPWM die Periode des Steuersignals S und Tein die Breite des Steuerpulses. Über den Tastgrad beziehungsweise die Pulsbreite Tein kann die pro Zeiteinheit zu fördernde Pulvermenge Q eingestellt werden. Dabei gilt, je kleiner der Tastgrad ist, desto niedriger ist die pro Zeiteinheit zu fördernde Pulvermenge Q. Ist der Tastgrad Tein/TPWM = 0, wird kein Pulver gefördert. Bei einem Tastgrad Tein/TPWM = 1 ist die maximal zu fördernde Pulvermenge Q erreicht.

In Figur 3a ist beispielhaft ein pulsweitenmoduliertes Steuersignal S über der Zeit t dargestellt. Dabei entspricht S = 1 dem Steuerbefehl "Ventil öffnen" beim Auslassventil 13. Das Auslassventil 13 erhält also für die Zeitdauer Tein den Steuerbefehl "Ventil öffnen". Aufgrund von Toleranzen bei der Herstellung des Ventils, der Trägheit der mechanischen Ventilkomponenten, Totzeiten, Ventilverschleiss und sonstigen äusseren Einflüssen (wie zum Beispiel Temperatur und Alterung der Quetsche) entspricht die Zeitdauer Tein allerdings nicht exakt der Zeitdauer, für die das Pulver tatsächlich durch das Auslassventil 13 strömen kann.

Mit Hilfe des Sensors 210 wird nun die Zeitdauer Tist gemessen, für die das Pulver P tatsächlich durch das Auslassventil 13 hindurch in den Pulverkanal 61.1 strömt und einer Auswerteeinheit 220 zugeführt. Von einem Sollwertgeber 200 erhält die Auswerteeinheit 220 zudem einen Sollwert Tsoll, der der gewünschten Zeitdauer entspricht, für die das Auslassventil 13 geöffnet sein soll. Aus dem Sollwert Tsoll und dem Istwert Tist ermittelt die Auswerteeinheit 220 die Abweichung ΔT vom Sollwert Tsoll.

Falls die ΔT einen bestimmten vorgegebenen Schwellwert überschreitet, kann die Auswerteeinheit 220 eine zum Beispiel optische oder akustische Meldung an das Bedienpersonal ausgeben.

Stattdessen oder zusätzlich dazu kann auch vorgesehen sein, dass die Auswerteeinheit 220 die Abweichung ΔT an eine Regeleinheit 230 weiterleitet. In diesem Fall bilden die Auswerteeinheit 220, die Regeleinheit 230 und das Auslassventil 13 Teile eines Regelkreises.

Figur 3b zeigt den zeitlichen Verlauf des Luftdrucks p(TL) der Transportluft TL. Im vorliegenden Beispiel ist p(TL) konstant. Figur 3c schliesslich zeigt in einem Beispieldiagramm die pro Zeit geförderte Pulvermenge Q am Auslass 40.2 der Pulverleitung 40. Dabei ist zu erkennen, dass - auch wenn das Auslassventil 13 zeitweilig geschlossen ist - trotzdem Pulver gefördert wird. Der Grund hierfür liegt darin, dass die Zeiten, in denen das Auslassventil 13 geschlossen ist, kurz genug sind und sich die Transportluft TL in der Pulverleitung 40 im Laufe der Zeit mit dem Pulver vermischt. Dass der Pulverstrom im Einlassbereich 40.1 der Pulverleitung 40 immer wieder durch das Auslassventil 13 unterbrochen wurde, ist am Auslass 40.2 nicht mehr feststellbar. Am Auslass 40.2 der Pulverleitung 40 steht ein homogenes Pulver-Luftgemisch zur Verfügung.

Bei einer bevorzugten und getesteten Ausführungsform kann die zu fördernde Pulvermenge zwischen 30 bis 2000 g/min eingestellt werden. Es kann die Pulverfördereinrichtung 110 aber auch so angepasst werden, dass Pulvermengen von 10 bis 5000 g/min gefördert werden können.

Bei einer getesteten Ausführungsform konnte das Pulver über eine Distanz zwischen 5 bis 30m gefördert werden. Die Pulverfördereinrichtung 110 kann aber auch so angepasst werden, dass das Pulver über Distanzen von 1m bis 50m gefördert werden kann.

Es können dazu Pulverleitungen 40 mit einem Innendurchmesser von 3 bis 30 mm eingesetzt werden. Bei der getesteten Ausführungsform wurden verschiedene Schläuche mit Innendurchmessern zwischen 8 und 12 mm verwendet. Man kann aber auch Standardschläuche mit einem Innendurchmesser von 6 bis 14 mm benutzen.

Der Innendurchmesser der Pulverleitung 40 wird anhand der zu fördernden Pulvermenge ausgewählt. Bei kleineren Pulvermengen genügt in der Regel eine Pulverleitung mit einem kleineren Innendurchmesser. Die Transportluft TL kann in einem Bereich von 0.1 bis 50 Nm3/h (Normkubikmeter pro Stunde) beziehungsweise 0.5 bis 6 Nm3/h eingestellt werden, Die Transportluft TL kann in einem Druckbereich von 0.1 bis 10 bar eingestellt werden. Der Innendurchmesser der Quetsche liegt vorzugsweise in einem Bereich von 3 bis 10 mm, noch besser zwischen 3 bis 5 mm. Die Gesamtzykluszeit liegt vorzugsweise in einem Bereich von 100 bis 300 ms. Die Pulsweite kann vorzugsweise in einem Bereich von 5 bis 90 beziehungsweise 290 ms eingestellt werden.

Über den Druck p(TL) der Transportluft TL kann die Strömungsgeschwindigkeit des Pulverstroms eingestellt werden.

Je höher der Transportluftdruck p(TL) ist, desto schneller strömt das Pulver durch die Pulverleitung 40 und desto schneller breitet sich die vom Pulverapplikator 4 erzeugte Pulverwolke aus. Eine schnelle Pulverwolke ist von Vorteil, wenn sie weit in das zu beschichtende Werkstück eindringen soll. Dies ist zum Beispiel für ein Werkstück mit einer grossen Vertiefung hilfreich. Ist das Werkstück hingegen relativ flach, wird eher eine weiche und damit langsame Pulverwolke verwendet. Damit kann über die Strömungsgeschwindigkeit des Pulvers die Pulverwolke ideal an die Geometrie des zu beschichtenden Werkstücks angepasst werden. Zudem kann die Strömungsgeschwindigkeit an die jeweils verwendete Pulversorte (Korngrösse, Adhäsion, usw.) angepasst werden. Dies führt insgesamt zu einem optimierten Auftragswirkungsgrad. Es kann sichergestellt werden, dass über längere Zeit gleichbleibend, das heisst prozesssicher, reproduzierbar und verschleissarm Pulver gefördert werden kann. Es können organische Pulversorten und auch anorganische Pulversorten, wie zum Beispiel Email, gefördert werden.

Anstelle eines pulsweitenmodulierten Steuersignals S kann auch ein pulsfrequenz- oder pulsdichtemoduliertes Steuersignal S benutzt werden. Beim pulsfrequenzmodulierten Steuersignal S ist die Pulsbreite Tein der einzelnen Pulse zeitlich konstant. Je niedriger die Pulsdichte ist, desto niedriger ist die pro Zeiteinheit geförderte Pulvermenge Q. Ist die Pulsdichte 1, ist die maximal zu fördernde Pulvermenge Q erreicht.

Grundsätzlich können auch andere pulscodierte Steuersignale S benutzt werden, um die zu fördernde Pulvermenge Q einzustellen. Der Begriff pulscodiert soll hier verstanden werden als Umsetzung eines beliebigen Zahlenwertes in eine binäre Pulsfolge.

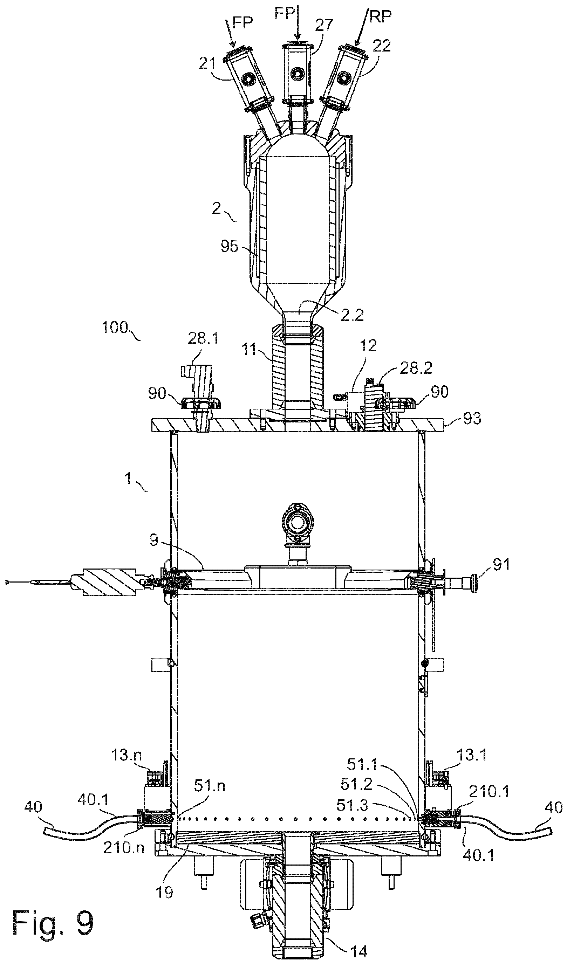

Figur 8 zeigt eine weitere mögliche Ausführungsform der erfindungsgemässen Pulverfördereinrichtung 110 in einer dreidimensionalen Ansicht. Figur 9 zeigt die weitere Ausführungsform der erfindungsgemässen Pulverfördereinrichtung 110 im Längsschnitt. Bei dieser Ausführungsform weist der Arbeitsbehälter 1 n Pulverauslässe 51.1 - 51.n auf, wobei jeder der Pulverauslässe 51.1 - 51.n mit jeweils einem Pulverauslassventil 13.1 bis 13.n gefolgt von jeweils einem Sensor 210.1 - 210.n verbunden ist. An jedes der Pulverauslassventile 13.1 bis 13.n kann jeweils eine Pulverleitung 40 und ein Pulverapplikator angeschlossen sein. Die Regeleinrichtung 230 kann so ausgebildet sein, dass mit ihr jedes der Pulverauslassventile 13.1 bis 13.n separat angesteuert werden kann. Damit wird ein hoher Grad an Flexibilität erreicht. So kann zum Beispiel der Applikator, der mit dem Pulverauslassventil 13.1 verbunden ist, abgeschaltet sein, indem das Pulverauslassventil 13.1 dauerhaft geschlossen bleibt, während derjenige Applikator, der mit dem Pulverauslassventil 13.2 verbunden ist, eingeschaltet wird, indem das Pulverauslassventil 13 entsprechend angesteuert wird. Zudem besteht die Möglichkeit die einzelnen Applikatoren mit unterschiedlich viel Pulver zu versorgen, indem die jeweiligen Auslassventile 13 entsprechend unterschiedlich angesteuert werden. Darüber hinaus können die einzelnen Applikatoren auch jeweils unterschiedlich schnelle Pulverwolken erzeugen, indem die Ventile 18 für die Transportluft TL auf entsprechend unterschiedliche Transportluftmengen eingestellt werden. Es ist auch möglich unterschiedlich lange Pulverleitungen 40 einzusetzen, wobei die Längenunterschiede zwischen den Pulverleitungen durch eine entsprechende, individuelle Ansteuerung der Auslassventile 13 kompensiert werden können.

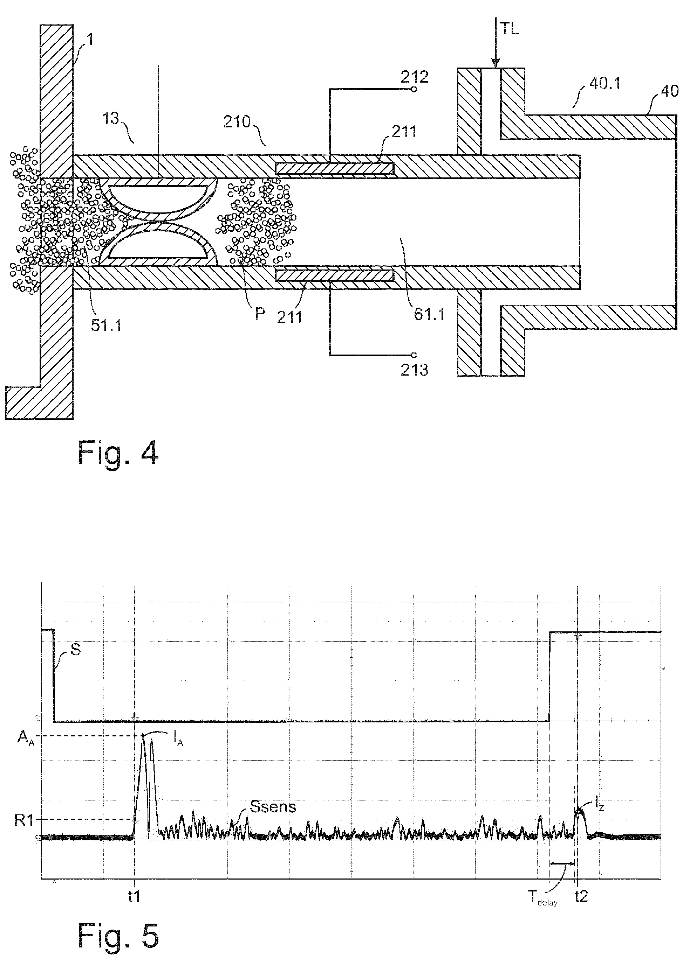

Um das Sieb 9 reinigen zu können, kann es aus der horizontalen Arbeitsposition (siehe Figur 5) und in eine Schräglage geschwenkt werden (in den Figuren nicht gezeigt). Hierfür ist am Arbeitsbehälter 1 ein Kippmechanismus 91 vorgesehen. Um den Deckel des Arbeitsbehälters 1 öffnen zu können, ist ein Verschluss 90 vorgesehen. Dieser kann zum Beispiel als Schraub- oder Klemmmechanismus ausgebildet sein. Im unteren Bereich des Arbeitsbehälters 1 können ein oder mehrere Sichtfenster 92 angeordnet sein. Es kann vorgesehen sein, dass sich im Arbeitsbehälter 1 auf der gegenüberliegenden Seite des Sichtfensters 92 ein weiteres Sichtfenster und eine Lichtquelle befinden. Damit ist es möglich, den Pulverstand im Arbeitsbehälter 1 während des Betriebs visuell zu erfassen, ohne den Arbeitsbehälter 1 öffnen zu müssen. Die visuelle Erfassung kann mittels Sensoren oder durch das Bedienpersonal erfolgen.

Bei einer Ausführungsform ist im Bereich der oberen Kammer am Arbeitsbehälter 1 ein kapazitiver Sensor 28.2 angeordnet. Der Sensor 28.2 kann zum Beispiel am Deckel 93 des Arbeitsbehälter 1 angeordnet sein. Mit ihm kann der Füllstand in der oberen Kammer des Arbeitsbehälters 1 detektiert, zur Steuerung 80 übermittelt und dort ausgewertet werden. Die Steuerung 80 kann so ermitteln, ob genügend Pulver durch das Sieb 9 rieselt, oder ob das Sieb 9 verstopft ist. Gegebenenfalls kann die Steuerung 80 entsprechend darauf reagieren, zum Beispiel mit einem Warnhinweis für das Bedienpersonal.

Bei einer weiteren Ausführungsform ist unterhalb des Siebs ein weiterer kapazitiver Sensor 28.3 angeordnet. Mit ihm kann der Füllstand in der oberen Kammer des Arbeitsbehälters 1 detektiert und zur Steuerung 80 übermittelt werden. Die Steuerung 80 kann das Sensorsignal auswerten und ist dadurch in der Lage zu ermitteln, ob sich zu viel Pulver oder zu wenig Pulver in der oberen Kammer befindet und kann darauf reagieren, indem sie zum Beispiel einen Warnhinweis für das Bedienpersonal ausgibt.

Bei einer weiteren Ausführungsform ist im Bereich der unteren Kammer am Arbeitsbehälter 1 ein kapazitiver Sensor 28.4 angeordnet.

Statt der kapazitiven Sensoren 28.3 und 28.4 können auch andere Sensoren verwendet werden, wenn sie zur Messung des Füllstands geeignet sind.

Bei einer weiteren Ausführungsform ist im Bereich vom Sensor 28.3 bis zum Deckel 93 des Arbeitsbehälters 1 ein Anschluss 35.1 vorgesehen, also im nicht fluidisierten Bereich. Zwischen dem Boden des Arbeitsbehälters 1 und dem Sensor 28.4 ist ein Anschluss 35.2 vorgesehen, sodass der Anschluss 35.2 sich immer im fluidisierten Bereich befindet. An die beiden Anschlüsse 35.1 und 35.2 ist ein Differenzdrucksensor 35 zur Erfassung der Differenz zwischen dem Druck in der oberen und dem Druck in der unteren Kammer anschliessbar. Das vom Differenzdrucksensor 35 erzeugte Differenzdrucksignal kann an die Steuerung 80 übermittelt werden. Aus dem Differenzdruck kann die Steuerung 80 die exakte Füllstandhöhe ermitteln.

Mit Hilfe der beiden kapazitiven Sensoren 28.3 und 28.4 kann die Füllstandshöhe in der unteren Kammer des Arbeitsbehälters 1 kalibriert werden. Es können für jedes Pulverauslassventil 13.1 bis 13.n durch mehrere Referenzmessungen mit unterschiedlichen Einstellungen die Pulverausstossmengen ermittelt werden. Es können dadurch auch während des Betriebs Füllstandsmessungen durchgeführt werden. Dazu wird für eine bestimmte Zeitdauer verhindert, dass Pulver vom Zwischenbehälter 2 in den Arbeitsbehälter 1 gelangt. Dann wird die gesamte Pulvermenge ermittelt, die von den verwendeten Pulverauslassventilen 13.1 bis 13.x in einem bestimmten Zeitraum gefördert wurde. Anschliessend wird von der Steuerung 80 überprüft, ob die Gesamtpulvermenge innerhalb einer bestimmten Bandbreite liegt. Falls dies nicht der Fall ist, kann die Steuerung 80 einen Hinweis ausgeben. Hierzu wird auf das aus dem Patent EP 1092958 B1 bekannte Verfahren zur Bestimmung einer Pulvermenge oder Pulvermengenänderung in einem Behälter verwiesen.

Figur 9 zeigt eine mögliche Ausführungsform des Zwischenbehälters 2 in einem Längsschnitt. Im Inneren des Zwischenbehälters 2 befindet sich eine semipermeable Wand 95, die für Luft durchlässig, für Pulver hingegen undurchlässig ist. Über den Anschluss 2.1 und das daran angeschlossene Ventil 24 kann, wie bereits beschrieben, Luft aus dem Zwischenbehälter 2 herausgesaugt und ein Unterdruck erzeugt werden. Die semipermeable Wand 95 sorgt dafür, dass das in den Zwischenbehälter 2 gesaugte Pulver nicht über den Anschluss 2.1 abgesaugt werden kann. Wird durch das Ventil 24 und den Anschluss 2.1 Druckluft in den Zwischenbehälter 2 gepresst, kann diese durch die semipermeable Wand 95 hindurchströmen und im Zwischenbehälter 2 einen Überdruck erzeugen. Wenn das Ventil 11 geöffnet ist, kann die Druckluft auch dazu benutzt werden, um die Wand 95 von dort abgelagertem Pulver zu befreien.

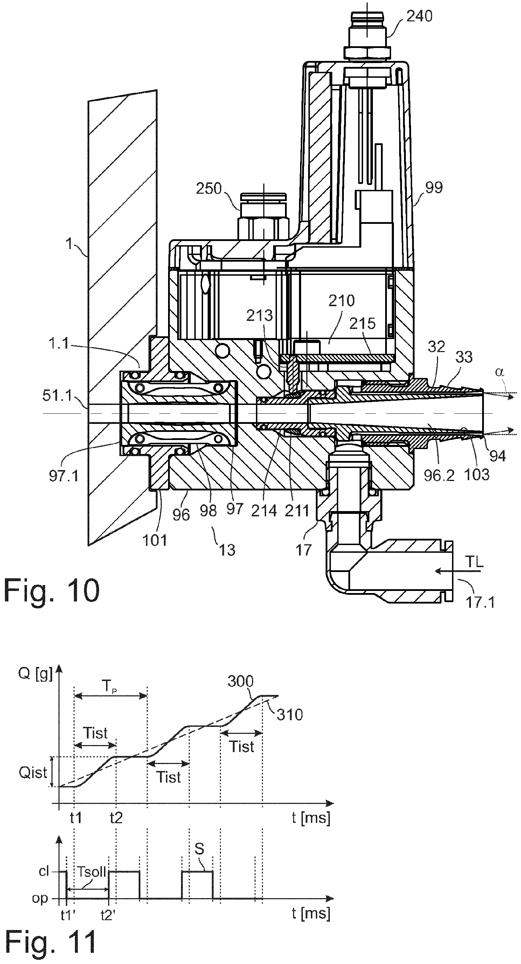

Figur 10 zeigt eine mögliche Ausführungsform des Pulverauslassventils 13 zusammen mit einer möglichen Ausführungsform des Influenzsensors 210 im Schnitt. Das Auslassventil 13 umfasst einen Ventilkörper 96 und eine Adapterplatte 101. Ventilkörper 96 kann mit Schrauben (in den Figuren nicht gezeigt) an der Adapterplatte 101 angeschraubt sein. Die Adapterplatte 101 wiederum kann am Arbeitsbehälter 1 ebenfalls mit Schrauben befestigt sein. Bei der Montage wird zuerst die Adapterplatte 101 an der Behälterwand 1 angeschraubt; anschiessend dann der Ventilkörper 96 an der Adapterplatte 101. In der in Figur 10 gezeigten Ausführungsform ist die Adapterplatte 101 in eine entsprechend ausgebildete Aufnahme 1.1 am Arbeitsbehälter 1 eingesetzt. Damit der Kanal im Arbeitsbehälter 1 für den Pulverauslass 51.1 möglichst kurz ist, ist die Aufnahme 1.1, wie in Figur 10 gezeigt, in den Arbeitsbehälter 1 versenkt und als Sackloch ausgebildet. Der stromaufwärtige Endabschnitt 97.1 der Quetsche 97 kann ebenfalls in der Aufnahme 1.1 platziert sein. Dies hat den Vorteil, dass damit die Quetsche 97 richtig positioniert ist. Dies muss jedoch nicht zwingend so sein.

Das Ventil 13 umfasst zudem einen Ventil-Steueranschlussblock 99, der zum Beispiel als elektropneumatisches Schnellschaltventil ausgebildet sein kann. Dieses hat vorteilhafterweise eine kurze Schaltzeit und eine kurze Reaktionszeit. Die elektrische Ansteuerung des Ventils 13 erfolgt über einen elektrischen Anschluss 240 und die Druckluftversorgung des Ventils 13 über einen Druckluftanschluss 250. Der Ventil-Steueranschlussblock 99 ist über ein nicht gezeigtes elektrisches Steuerkabel, das an den elektrischen Anschluss 240 angeschlossen ist, mit dem entsprechenden Steuerausgang der Regeleinrichtung 230 verbunden. Die Regeleinrichtung 230 kann damit über das Steuersignal S veranlassen, dass das Ventil 13 geöffnet oder geschlossen wird. Im Inneren des Ventilkörpers 96 befindet sich die Schlauchquetsche 97, deren Durchlass - abhängig vom Druckluft-Steuersignal S - entweder offen oder verschlossen ist. Im druckluftfreien Zustand ist die Schlauchquetsche 97 entspannt und ihr Durchlass geöffnet. Die Aussenseite der Schlauchquetsche 97 liegt dann an der Innenseite des Rings 98 an. Der Ring 98 sorgt dafür, dass - unabhängig davon welcher Druck im Arbeitsbehälter 1 herrscht - die Öffnungsweite der Schlauchquetsche 97 im druckluftfreien Zustand gleichbleibt und definiert ist. Damit wird eine reproduzierbare Öffnungsweite des Ventils 13 gewährleistet. Der Ring 98 kann zum Beispiel aus Kunststoff hergestellt sein. Dieser Aufbau hat den Vorteil, dass der Druck im Arbeitsbehälter 1 hilft die Schlauchquetsche 97 zu öffnen. Bei einem Pulverförderer, der die Quetsche auch bei Unterdruck öffnen muss, kann dies mit der Zeit zu Problemen führen.

Zur Steuerung des Ventils 13 ist ein Steuerventil vorgesehen, das im Steueranschlussblock 99 angeordnet ist. Vorteilhafter Weise wird als Steuerventil im Steueranschlussblock 99 ein sogenanntes Normally Open Ventil eingesetzt. Bei einem Ausfall der Steuerung 80 beziehungsweise der Regeleinrichtung 230, wenn also kein Steuersignal S am Steuerventil anliegt, ist das Normally Open Ventil geöffnet, sodass die Quetsche 97 des Ventils 13 verschlossen ist.

Wenn sich der Transportluft-Einlass 17 unmittelbar an das Ventil 13 anschliesst, hat dies den Vorteil, dass die zugeführte Transportluft TL sich im Wesentlichen über die gesamte Länge der Pulverleitung 40 mit dem geförderten Pulver vermischen kann. Eine solche Anordnung ist jedoch nicht zwingend erforderlich. Der Einlass 17 kann sich auch weiter stromabwärts an der Pulverleitung 40 befinden.

Alternativ oder zusätzlich dazu kann weiter stromabwärts in der Pulverleitung 40 ein Zusatzluftanschluss für zusätzliche Luft vorgesehen sein (in den Figuren nicht gezeigt). Dieser Zusatzluftanschluss, auch Zusatzluftadapter genannt, kann in unmittelbarer Nähe zum Sprühapplikator 4 angeordnet oder in den Sprühapplikator 4 integriert sein. Wenn der Sprühapplikator 4 ohne die Zusatzluft betrieben wird, kann eine weiche Pulverwolke erzeugt werden. Dies kann zum Beispiel bei der Beschichtung von flachen Werkstücken von Vorteil sein. Sollen hingegen Werkstücke mit Vertiefungen beschichtet werden, kann der Sprühapplikator 4 mit zusätzlicher Luft betrieben werden. Mit Hilfe der zusätzlichen Luft werden die Pulverpartikel schneller transportiert und es entsteht eine schnelle Pulverwolke, die auch in die Vertiefungen des Werkstücks eindringen kann. Die Steuerung der Zusatzluft kann mit der Steuerung 230 erfolgen.

Über die Steuerung des Anteils an zusätzlicher Luft kann die Pulverwolke schnell an verschiedene Werkstückgeometrien angepasst werden.

Es ist des Weiteren von Vorteil, wenn die Transportluft TL in einem flachen Winkel α ringförmig in die Pulverleitung 40 strömt. Mit der in Figur 10 gezeigten Ausführungsform ist dies möglich. Der Einlasskörper 101 mit dem Einlass 17 für die Transportluft TL weist einen axial verlaufenden Luftkanal 32 auf, der den stromabwärtigen Endbereich des Pulverkanals 96.2 des Ventilkörpers 96 ringförmig umgibt. Der Pulverkanal 96.2 kann, wie in Figur 10 gezeigt, trichterförmig verlaufen und sich in stromabwärtiger Richtung aufweiten. Der Pulverkanal 96.2 kann als ein separates Bauteil ausgebildet sein, das im Folgenden als Mundstück 103 bezeichnet wird. Auf der stromaufwärtigen Seite kann auf das Mundstück 103 eine Hülse 214 gesteckt sein, die die Messelektrode 211 trägt. Im vorliegenden Ausführungsbeispiel ist die Messelektrode 211 ringförmig ausgebildet und über den Sensoranschluss 213 mit einer Sensorelektronik 215 verbunden. Der Sensoranschluss 213 kann, wie in Figur 10 gezeigt, als Kontaktstift ausgebildet sein und mittels einer (nicht gezeigten) Feder auf die Messelektrode 211 gedrückt werden. Die Sensorelektronik 215 wiederum ist über den elektrischen Anschluss 240 mit der Steuerung 230 verbunden.

Der Ventilkörper 96 kann in seinem stromabwärtigen Endbereich einen Schlauchnippel 33 aufnehmen. Die Pulverleitung 40 beziehungsweise der Pulverschlauch kann auf den Schlauchnippel 33 geschoben und befestigt werden. Es ist hier auch eine Schlauchkupplung, zum Beispiel mit eine Schnappverbindung, vorstellbar (in den Figuren nicht gezeigt). Die Innenseite des Schlauchnippels 33 und die Aussenseite des Pulverkanals 96.2 bilden einen ringförmigen Transportluftkanal 32. Das stromabwärtige Ende des Schlauchnippels 33 und des Pulverkanals 96.2 bilden einen Ringspalt 94, der als stromabwärtige Öffnung des Transportluftkanals 32 dient. Zur Versorgung des Transportluftkanals 32 ist eine Querbohrung im Ventilkörper 96 vorgesehen. Die Transportluft TL strömt durch den Transportluftkanal 32 zu dessen stromabwärtigen Ende und von dort ringförmig und in einem flachen Winkel α in die Pulverleitung 40.

Die Transportluft TL mittels des Ringspalts 94 in die Pulverleitung 40 einströmen zu lassen, hat mehrere Vorteile. Weil die Transportluft TL durch den Ringspalt 94 so in die Pulverleitung 40 eingeleitet wird, dass sie die gleiche Richtung wie der Hauptstrom aufweist, wird am Einlass 17 eher ein Unterdruck erzeugt als ein Staudruck (kein Luftwiderstand, keine Barriere). Dadurch entstehen weniger Turbulenzen in der Pulverleitung 40. Zudem lässt sich der Verschleiss an der Wandung der Pulverleitung 40 reduzieren oder sogar gänzlich vermeiden.

Es sind auch andere Ausführungsformen für den Ventilkörper 96 möglich. Der Ventilkörper 96 kann zum Beispiel einen oder mehrere Kanäle aufweisen, über die die Transportluft TL in einem Winkel zwischen 0 und 89 Grad in die Pulverleitung 40 eingeleitet wird. Die durch die Kanäle strömende Transportluft TL erzeugt eher einen Unterdruck in der Pulverleitung 40.

Es ist auch möglich den Ventilkörper 96 so auszubilden, dass die Transportluft TL in einem 90 Grad Winkel oder grösser 90 Grad in die Pulverleitung 40 einströmt.

Der Ventilkörper 96 kann auch so ausgebildet sein, dass die Transportluft TL über ein Filterrohr aus mikroporösem Material in die Pulverleitung 40 einströmt.

Auch kann vorgesehen sein, dass das Ventil 18 für die Transportluft TL während der Auslassphase A kurzzeitig geschlossen wird, sodass kurzzeitig keine Transportluft TL in die Pulverleitung 40 eingeleitet wird. Dadurch wird der Einfluss der Transportluft TL auf die geförderte Pulvermenge Q noch weiter reduziert.

Bei Bedarf kann der Pulverkanal 96.2 des Ventilkörpers 96 auf der stromabwärtigen Seite des Ventils 13 konisch ausgebildet sein.

Die Pulverleitung 40 kann ganz oder teilweise als Schlauch ausgebildet sein.

Die Pulverbeschichtungsanlage kann, wie in Figur 1 gezeigt, zusätzlich zur Pulverfördereinrichtung 110 und der Beschichtungskabine 6 auch noch einen Zyklon 7 zur Rückgewinnung des Pulvers und ein Nachfilter 8 aufweisen.

Um das Overspray aus der Beschichtungskabine 6 zu entfernen, wird es zusammen mit der in der Beschichtungskabine 6 befindlichen Luft als Pulver-Luftgemisch aus der Kabine gesaugt und dem Zyklon 7 zugeführt, der als Monozyklon ausgebildet sein kann. Das Pulver-Luftgemisch strömt oben tangential in den Zyklon 7 und im Zyklon spiralförmig nach unten. Durch die bei der Rotation des Pulver-Luftstroms entstehende Zentrifugalkraft werden die Pulverpartikel nach aussen an die Aussenwand des Zyklons gedrückt. Anschliessend werden die Pulverpartikel nach unten in Richtung des Pulverauslasses des Zyklons gefördert und dort gesammelt. Die von den Pulverpartikeln befreite Luft wird über ein im Zyklon befindliches Zentralrohr abgesaugt. Der so gereinigte Luftstrom kann noch dem Nachfilter 8 zugeführt werden, um auch noch das in der Luft verbliebene restliche Pulver herauszufiltern. Wenn das Ventil 71 geöffnet ist, kann das rezyklierte Pulver RP aus dem Zyklon 7 entnommen und über eine Pumpe 73 und eine Leitung 41 wieder der Pulverfördervorrichtung 100 zugeführt werden. Wenn das Ventil 72 geöffnet ist, kann das im Zyklon herausgefilterte Pulver dessen auch über die Leitungen 45 und 44 dem Nachfilter 8 zugeführt werden.

Der Nachfilter 8 kann mit Filterpatronen ausgestattet sein, die die restlichen in der Luft verbliebenen Pulverpartikel herausfiltern. Ein vorzugsweise elektrisch angetriebener Ventilator oder ein Gebläse sorgt für den notwendigen Luftdurchsatz.

Wenn kein Zyklon 7 verwendet wird, kann auch das Pulver aus dem Nachfilter 8 entnommen und über die Pumpe 73 und die Leitung 41 wieder der Pulverfördereinrichtung 110 zugeführt werden.

Der Sensor 210 zur Ermittlung der Ist-Öffnungsdauer Tist des Pulverauslassventils 13 ist vorzugsweise als Influenz-Sensor ausgebildet.

In Figur 4 ist ein möglicher prinzipieller Aufbau eines solchen Influenz-Sensors 210 dargestellt. Im Pulverkanal 61.1 befindet sich eine elektrisch leitende Messelektrode 211, die zum Beispiel ringförmig ausgebildet sein kann. Die Messelektrode 211 ist gegenüber den durch den Pulverkanal 61.1 strömenden Pulverpartikeln P elektrisch isoliert.

Das Messprinzip des Influenz-Sensors 210 beruht auf der Influenzwirkung elektrisch geladener Pulverpartikel P. Nähert man ein felderzeugendes, zum Beispiel positiv geladenes Pulverpartikel P oder kurzum Partikel der neutralen, isoliert angeordneten Messelektrode 211, so werden die Elektronen an jenes Ende der Messelektrode 211 gezogen, das dem geladenen Partikel P zugewandt ist. An diesem Ende bildet sich eine negative Ladung. An der dem Partikel abgewandten Seite der Messelektrode 211 bildet sich ein Elektronenmangel und folglich eine positive Ladung. In einem Nichtleiter mit ortsgebundenen Ladungen tritt nur molekulare Dipolbildung auf.

Strömt ein Partikel durch den Erfassungsbereich der ringförmigen Messelektrode 211, so entsteht ein erster Stromimpuls beim Eintritt des Partikels in den Erfassungsbereich der Messelektrode 211 und ein zweiter Stromimpuls mit umgekehrten Vorzeichen beim Austritt des Partikels. Eine vorherige, gezielte Aufladung der Partikel ist in der Regel nicht erforderlich.

Die Gesamtheit der elektrisch geladenen Partikel erzeugt eine Raumladungswolke, die wiederum ein entsprechendes elektrisches Feld erzeugt. Das elektrische Feld wandert zusammen mit den Partikeln durch den Erfassungsbereich der Messelektrode 211. Unter dem Einfluss des elektrischen Feldes kommt es zu einer vorübergehenden Ladungsverschiebung der in der Messelektrode frei beweglichen Elektronen (Influenz). Dabei weist die in der Messelektrode 211 influenzierte Ladung den gleichen Betrag auf wie die Ladung jenes Teils der Raumladungswolke, der sich im Erfassungsbereich der Messelektrode 211 befindet. Wenn sich die Raumladungswolke im Pulverkanal 61.1 bewegt, wird in der Messelektrode 211 ein Strom i(t) generiert, dessen Höhe von der Geschwindigkeit v(t) der Wolke abhängt, mit der sie durch den Kanal 61.1 strömt.

Für die Raumladungsdichte p gilt:

$$\rho((r,\alpha,z)^T, t) = e \cdot n \cdot N((r,\alpha,z)^T, t)$$

Wobei gilt:

N = Anzahlkonzentration,
n = mittlere Ladungszahl der Partikel,
e = Elementarladung,
r, a, z = Ortskoordinaten,
t = Zeit,
T = Transponierung.

Die von der Messelektrode 211 umschlossene Ladung q kann durch folgende Gleichung beschrieben werden:

$$q(t) = \int \rho((r,\alpha,z)^T, t)dV = \varepsilon \oint E((r,\alpha,z)^T, t)dS$$

Darin sind:

E = elektrische Feldstärke,
$\varepsilon$ = dielektrische Leitfähigkeit,
V = Volumen, das von der Elektrode 211 umschlossen wird,
S = geschlossene Fläche.

Für den am Ausgang des Influenz-Partikelsensors 210 gemessenen Strom i gilt:

$$i(t) = -\frac{d}{dt}q(t)$$

i = Strom von der Messelektrode 211 zur Masse

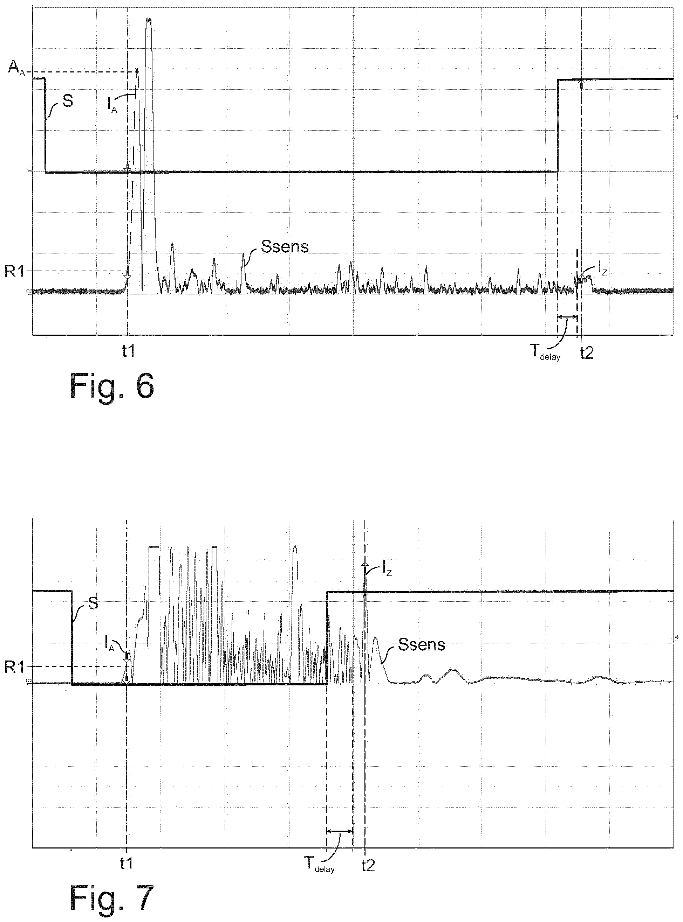

Die Regeleinrichtung 230 erzeugt ein Steuersignal S für das Pulverauslassventil 13. Ein Beispiel für den zeitlichen Verlauf eines solchen Steuersignals S ist in Figur 5 oben gezeigt. Das daraufhin vom Sensor 210 generierte Messsignal Ssens ist in Figur 5 unten dargestellt. In den Figuren 6 und 7 sind zwei weitere Beispiele für zeitliche Verläufe des Steuersignals S und des von dem Sensor 210 erzeugten Messsignals Ssens abgebildet. Aus dem Messsignal Ssens kann die tatsächliche Öffnungsdauer Tein = t2 - t1 für das Pulverauslassventil 13 ermittelt werden. Die tatsächliche Öffnungsdauer Tein wird im Folgenden auch als Ist-Öffnungsdauer Tist bezeichnet. Es wird angenommen, dass zum Zeitpunkt t1 das Pulverauslassventil 13 tatsächlich offen und zum Zeitpunkt t2 tatsächlich geschlossen ist.

Eine Möglichkeit den Zeitpunkt t1 zu bestimmen, besteht darin, den Signalpegel des Messignals Ssens mit einem Referenzwert R1 zu vergleichen. Sobald der Signalpegel des Messignals Ssens den Referenzwert R1 überschritten hat (was in Figur 5 zum Zeitpunkt t1 der Fall ist), wird angenommen, dass das Auslassventil 13 geöffnet ist.

Der Zeitpunkt t2 kann zum Beispiel wie folgt bestimmt werden. Nachdem das Auslassventil 13 von der Steuerung 230 abgeschaltet wurde, wird eine gewisse Wartezeit $T_{delay}$ gewartet. Die Steuerung 230 berücksichtigt zum Beispiel bei den in den Figuren 5 und 7 gezeigten Sensorsignalen Ssens jeweils eine Wartezeit $T_{delay}$ von 4 ms. Bei dem Sensorsignal Ssens gemäss Figur 6 beträgt die Wartezeit $T_{delay}$ = 3 ms. In der Regel haben die während der Wartezeit $T_{delay}$ auftretenden Signalspitzen nichts mit dem Abschalten des Auslassventils 13 zu tun und bleiben deshalb bei der Bestimmung von t2 unberücksichtigt. Durch das schnelle Zusammendrücken der Schlauchquetsche 97 im Auslassventil 13 wird das durch den Influenzsensor 210 strömende Pulver kurzzeitig beschleunigt. Dieser Effekt spiegelt sich im Sensorsignal Ssens als ausgeprägte Spitze Iz wider. Danach tritt im Sensorsignal Ssens in der Regel keine weitere ausgeprägte Signalspitze mehr auf. Der Zeitpunkt, zu dem die Spitze Iz auftritt, ist t2.

Die Zeitpunkte t1 und t2 können beispielsweise auch auf folgendem Weg ermittelt werden.
Aus zum Beispiel n vorgängigen Messsignalen Ssensl bis Ssensn wird die gemittelte Amplitude $A_A$ des ersten grossen Impulses $I_A$ errechnet. Der Schwellwert R1 kann aus dieser gemittelten Amplitude $A_A$ zum Beispiel wie folgt berechnet werden:

$$R1 = 0,1 * A1$$

Der Zeitpunkt t1 ist nun jener Zeitpunkt, zu dem die Amplitude des Messignals Ssens den Schwellwert R1 erreicht.

Figur 11 zeigt im oberen Diagramm den zeitlichen Verlauf der geförderten Pulvermenge Q und im unteren Diagramm den zeitlichen Verlauf des Steuersignals S. Wenn das Steuersignal S sich im Zustand cl befindet, soll das Pulverauslassventil 13 geschlossen sein, so dass kein Pulver gefördert wird. Befindet sich das Steuersignal im Zustand op soll das Pulverauslassventil 13 geöffnet sein, so dass Pulver gefördert wird. Wenn das Steuersignal zum Zeitpunkt t1' vom Zustand cl zu op wechselt, vergeht eine gewisse Zeit, bis das Pulverauslassventil 13 reagiert und öffnet. Der Zeitpunkt t1 kennzeichnet jenen Zeitpunkt, zu dem das Auslassventil 13 also tatsächlich öffnet. Wenn das Steuersignal zum Zeitpunkt t2' vom Zustand op zu cl wechselt, vergeht wiederum eine gewisse Zeit, bis das Pulverauslassventil 13 reagiert und schliesst. Der Zeitpunkt t2 kennzeichnet jenen Zeitpunkt, zu dem das Auslassventil 13 tatsächlich schliesst.

Die Soll-Öffnungsdauer Tsoll kann auf verschiedene Arten bestimmt werden.

Eine Möglichkeit die Soll-Öffnungsdauer Tsoll zu berechnen, ist die folgende:

$$Tsoll = t2' - t1'$$

Dabei sind t1' und t2', wie bereits erwähnt, die Schaltzeitpunkte des Steuersignals S.

Eine weitere Möglichkeit, die Soll-Öffnungsdauer Tsoll zu bestimmen, ist im Folgenden wiedergegeben. Es wird eine Referenzmessung für Tsoll durchgeführt. Dabei kann sinngemäss wie weiter unten im Abschnitt Kalibrierung beschrieben, vorgegangen werden. Die Soll-Öffnungsdauer Tsoll berechnet sich in diesem Fall zu:

$$Tsoll = t2 - t1$$

Dabei sind t1 und t2, wie bereits erwähnt, die Zeitpunkte, zu denen das Pulverauslassventil 13 tatsächlich offen beziehungsweise geschlossen ist. Somit würde im Diagramm gemäss Figur 11 die erste Bestimmung von Tist als Zeitdauer Tsoll benutzt werden (Referenzmessung). Somit gilt für die erste Messung:

$$Tsoll := Tist = t2 - t1$$

Ab der zweiten und jeder weiteren Messung (Istwertmessung) gilt:

$$\mathtt{Tist_n = t_n - t_{n-1}}$$

Die zeitliche Abweichung ΔT zwischen Soll-Öffnungsdauer Tsoll und Ist-Öffnungsdauer Tist ergibt sich dann zu:

$$\mathtt{\Delta T = Tsoll - Tist_n = (t2 - t1) - (t_n - t_{n-1})}$$

Für den Fall, dass die Pulverfördereinrichtung 110 - wie in einem der vorherigen Abschnitte beschrieben - mit mehreren Auslassventilen 51.1 - 51.n und den dazugehörigen Sensoren 13.1 - 13.n ausgestattet ist, kann die Auswerteeinheit 220 auch so ausgebildet und betreibbar sein, dass mit ihr die Ist-Öffnungsdauer Tist des Pulverauslassventils 51.1 mit der Ist-Öffnungsdauer Tist des weiteren Pulverauslassventils 51.n verglichen wird. Wenn also die Pulverfördereinrichtung 100 mit n Auslassventilen 51.1 - 51.n und den dazugehörigen n Sensoren 13.1 - 13.n ausgestattet ist, können auch n Ist-Öffnungsdauern Tist ermittelt werden. Diese n Ist-Öffnungsdauern Tist können nun mit der Auswerteeinheit 220 miteinander verglichen werden, um festzustellen, ob eine der n Ist-Öffnungsdauern Tist aus einem vorher definierten Rahmen fällt. Vorteilhafterweise kann damit die Aussagegenauigkeit über die Ist-Öffnungsdauern Tist weiter erhöht werden.

Statt den Sensor 210 als Influenz-Sensors auszubilden, kann der Sensor 210 auch als optischer Sensor oder als Dichte-Sensor oder als Mikrowellensensor ausgebildet sein.

Der Pulverförderer 100 kann auch einen oder mehrere Injektoren oder eine Dichtstromförderpumpe umfassen. In diesem Fall ist der Sensor 210 beziehungsweise sind die Sensoren 210 vorzugsweise in der Nähe zum jeweiligen Injektor beziehungsweise zur Dichtstromförderpumpe angeordnet.

Kalibrierung

Die Kalibrierung kann auf verschiedene Arten erfolgen. Eine mögliche Art der Kalibrierung kann unter Zuhilfenahme der beiden kapazitiven Sensoren 28.3 und 28.4 erfolgen und basiert auf einer Differenzdruckmessung, welche bereits weiter oben erläutert wurde. Eine weitere Möglichkeit zur Kalibrierung wird im Folgenden beschrieben.

Die Pulverfördereinrichtung kann zum Beispiel wie folgt kalibriert werden. Während einer bestimmten Zeitdauer Ts, beispielsweise für 10 s, wird das Pulverauslassventil 13 geöffnet und das Pulver aus dem Arbeitsbehälter 1 über das Pulverauslassventil 13 und den Schlauch 40 zum Applikator 4 transportiert und von dort in einen Pulverauffangsack gesprüht. Anschliessend wird die im Pulverauffangsack aufgefangene Pulvermenge Q gewogen. Aus der Pulvermenge Q und der Zeitdauer Ts kann der Pulverstrom Q

$$\dot{Q} = \frac{Q}{Ts}$$

berechnet werden. Wird beispielsweise während der Zeitdauer Ts = 10 s eine Pulvermenge Q = 50 g aufgefangen, ergibt sich daraus ein Pulverstrom $\dot{Q} = 300\ \frac{g}{min}$.

Der oben beschriebene Vorgang wird auch als auslitern bezeichnet.

Jedes Mal, wenn sich das Pulverauslassventil 13 für eine bestimmte Zeitdauer Tist öffnet, wird eine bestimmte Pulvermenge Qist zum Applikator 4 gefördert. Über die Zeit betrachtet ergibt sich unmittelbar am Auslass des Auslassventils 13 beziehungsweise im Erfassungsbereich des Sensors 210 ein stufenförmiger Verlauf der geförderten Pulvermenge Q. In Figur 11 ist dieser Verlauf mit 300 gekennzeichnet. Je weiter der Pulverstrom im Schlauch 40 in Richtung Applikator 4 wandert, desto mehr werden die Stufen verschliffen, so dass am Ende ein geglätteter Pulverstrom den Applikator 4 erreicht. Dessen Verlauf ist in Figur 11 mit 310 gekennzeichnet.

In einem typischen Anwendungsfall beträgt ein Zyklus Tp = 300 ms. Bei einem angenommen Pulverstrom $\dot{Q} = 300\ \frac{g}{min}$ ergibt sich die förderbare Sollpulvermenge zu 0,15 g pro Zyklus.

Aus der Analyse der Zeitpunkte t1, t1', t2 und t2' beziehungsweise der Soll-Öffnungszeit Tsoll und der Ist-Öffnungszeit Tist kann auch auf die Abweichung der zu förderten Soll-Pulvermenge zur tatsächlich geförderten Ist-Pulvermenge ΔQ geschlossen werden.

Das folgende Zahlenbeispiel soll dies verdeutlichen. Die Soll-Öffnungszeit Tsoll soll Tsoll = 80 ms betragen. Die zu fördernde Sollpulvermenge Qsoll soll, wie oben erwähnt, 0,15 g/Tp sein. Aus der Auswertung vom Sensors 210 stammenden Messsignals Ssens ergibt sich, dass die Ist-Öffnungsdauer Tist allerdings Tist = 78 ms beträgt. Daraus ergibt sich die Ist-Pulvermenge Qist zu:

$$Qist = 0{,}15\,\frac{g}{TP} * \frac{78\,ms}{80\,ms} = 0{,}1463\,\frac{g}{TP}$$

Die Abweichung ΔQ der zu fördernden Soll-Pulvermenge Qsoll zur tatsächlich geförderten Ist-Pulvermenge Qist berechnet nun sich zu:

```
ΔQ = Qsoll - Qist
   = 0,15 g/Tₚ - 0,1463 g/Tₚ = 0,0037 g/Tₚ
```

Die Ermittlung der Ist-Öffnungsdauer Tist kann anhand einer Einzelmessung erfolgen. Stattdessen ist es auch möglich die Ist-Öffnungsdauer Tist aus n einzelnen Messwerten Tistl ... Tistn zu errechnen. Tist kann zum Beispiel der Mittelwert aus einer Reihe von Messwerten Tistl ... Tistn sein:

$$Tist = \frac{1}{n} * \sum_{i=1}^{n} Tisti$$

Die Messreihe Tistl ... Tistn kann zum Beispiel von einer 10 s oder auch 1 min lang dauernden Messung stammen.

Bei Bedarf kann zum Beispiel auch auf die Pulvermenge pro Minute berechnet, erfasst und gemittelt werden. Unter Zugrundelegung der oben angegebenen Beispielwerte ergeben sich folgende auf eine Minute bezogene Werte:

$$\dot{Q}soll = Qsoll \cdot Anzahl\ Zyklen = 0{,}15\,\frac{g}{Tp} \cdot 200\,Tp/\min = 300\,\frac{g}{min}$$

$$\dot{Q}ist = \dot{Q}soll \cdot \frac{tist}{tsoll} = 300\,\frac{g}{min} \cdot \frac{78ms}{80ms} = 292{,}50\,g/min$$

$$\Delta\dot{Q} = \dot{Q}soll - \dot{Q}ist = 300\,\frac{g}{min} - 292{,}50\,\frac{g}{min} = 7{,}50\,\frac{g}{min}$$

Die vorhergehende Beschreibung der Ausführungsbeispiele gemäss der vorliegenden Erfindung dient nur zu illustrativen Zwecken. Im Rahmen der Erfindung sind verschiedene Änderungen und Modifikationen möglich. So sind beispielsweise die verschiedenen in den Figuren 1 bis 4, 8, 9 und 10 gezeigten Komponenten der Fördereinrichtung und der Beschichtungsanlage auch auf eine andere als in den Figuren gezeigte Weise miteinander kombinierbar.

Bezugszeichenliste

| | |
|---|---|
| 1 | Arbeitsbehälter |
| 1.1 | Aufnahme |
| 1.2 | Entlüftungsanschluss |
| 1.3 | Reinigungsanschluss |
| 2 | Zwischenbehälter |
| 2.1 | Anschluss am Zwischenbehälter |
| 2.2 | Pulverauslass des Zwischenbehälters |
| 3 | Vorratsbehälter |
| 4 | Applikator |
| 5 | Applikator |
| 6 | Beschichtungskabine |
| 7 | Zyklonabscheider |
| 8 | Nachfilter |
| 9 | Ultraschallsieb |
| 10 | Werkstück |
| 11 | Ventil |

| 12 | Entlüftungsventil |
| 13 | Auslassventil |
| 13.1 - 13.n | Auslassventile |
| 14 | Ventil |
| 15 | Ventil |
| 16 | Ventil |
| 17 | Transportluftanschluss |
| 17.1 | Einlass für Transportluft |
| 18 | Dosiereinrichtung für die Transportluft |
| 19 | Fluidisiereinrichtung |
| 20 | Rüttelvorrichtung |
| 21 | Ventil für Frischpulver |
| 22 | Ventil |
| 23 | Ventil |
| 24 | Ventil |
| 25 | Vakuum-Ventil oder Unterdruckerzeuger |
| 26 | Ventil |
| 27 | Ventil für Frischpulver |
| 28 | Sensor |
| 28.1 | Drucksensor |
| 28.2 | Sensor |
| 28.3 | Sensor |
| 28.4 | Sensor |
| 29 | Sensor |
| 30 | Vorratsbehälter |
| 31 | Pumpe |
| 32 | Transportluftkanal |
| 33 | Schlauchnippel |
| 34 | Druckregelventil |
| 35 | Differenzdrucksensor |
| 35.1 | Anschluss für Differenzdrucksensor |
| 35.2 | Anschluss für Differenzdrucksensor |
| 40 | Pulverleitung |
| 40.1 | erstes Ende der Pulverleitung |
| 40.2 | zweites Ende der Pulverleitung |
| 41 | Leitung |
| 42 | Leitung |
| 43 | Leitung |
| 44 | Leitung |
| 45 | Leitung |
| 46 | Leitung |
| 47 | Leitung |
| 50 | Pulvereinlass |
| 51.1 - 51.n | Pulverauslässe |
| 61.1 | Pulverkanal |
| 71 | Ventil |
| 72 | Ventil |
| 73 | Pumpe |
| 80 | Steuerung |
| 90 | Verschluss |
| 91 | Kippmechanismus |
| 92 | Sichtfenster |
| 93 | Deckel des Arbeitsbehälters |
| 94 | Ringspalt |
| 95 | semipermeable Wand |
| 96 | Ventilkörper |
| 96.2 | Pulverkanal |
| 97 | Schlauchquetsche |

| | |
|---|---|
| 97.1 | Endabschnitt der Schlauchquetsche |
| 98 | Ring |
| 99 | Ventil-Steueranschlussblock |
| 100 | Pulverförderer |
| 101 | Adapterplatte |
| 102 | Schraube |
| 103 | Mundstück |
| 110 | Pulverfördervorrichtung |
| 200 | Sollwertgeber |
| 210 | Sensor |
| 210.1 - 210.n | Sensor 1 - Sensor n |
| 211 | Messelektrode |
| 212 | Sensoranschluss |
| 213 | Sensoranschluss |
| 214 | Hülse |
| 215 | Sensorelektronik |
| 220 | Auswerteeinheit |
| 230 | Regeleinheit |
| 240 | elektrischer Anschluss |
| 250 | Druckluftanschluss |
| 300 | Pulverstrom am Sensor |
| 310 | Pulverstrom am Applikator |
| A | Auslassphase |
| D | Tastgrad |
| DL | Druckluft |
| FL | Fluidisierluft |
| F | Förderphase |
| FP | Frischpulver |
| P | Pulverpartikel |
| Q | Pulvermenge |
| Q | Pulvermenge pro Zeiteinheit |
| R1 | Schwellwert |
| RP | rezykliertes Pulver |
| S | Steuersignal |
| TL | Transportluft |
| t | Zeit |
| t1, t2 | Zeitpunkt |
| t1', t2' | Zeitpunkt |
| T | Zeitdauer |
| TPWM | Periode des pulsweitenmodulierten Signals |
| Tsoll | Soll-Öffnungsdauer |
| Tist | tatsächliche Öffnungsdauer oder Ist-Öffnungsdauer |
| $\Delta T$ | Abweichung |
| $T_{delay}$ | Wartezeit |
| $T_P$ | Periode oder Zyklusdauer |
| $\alpha$ | Winkel |

**Patentansprüche**

1. Pulverfördereinrichtung für Beschichtungspulver,

- bei der ein Pulverförderer (100) mit einem Pulverauslasskanal (51.1) vorgesehen ist,
- bei der ein Pulverauslassventil (13) vorgesehen ist, um den Pulverauslasskanal (51.1) zu öffnen oder zu verschliessen,
- bei der ein Sollwertgeber (200) zur Vorgabe einer Soll-Öffnungsdauer (Tsoll) des Pulverauslassventils (13) vorgesehen ist,

**dadurch gekennzeichnet, dass**

- ein Sensor (210) zur Ermittlung der Ist-Öffnungsdauer (Tist) des Pulverauslassventils (13) vorgesehen ist, und dass
- eine Auswerteeinheit (220) zur Ermittlung der Abweichung (ΔT) zwischen der Soll-Öffnungsdauer (Tsoll) und der Ist-Öffnungsdauer (Tist) vorgesehen ist.

2.  Pulverfördereinrichtung nach Patentanspruch 1,
    bei der der Sensor (210) auf der Auslassseite des Ventils (13) angeordnet ist.

3.  Pulverfördereinrichtung nach Patentanspruch 1 oder 2,
    bei der der Sensor (210) als Influenz-Sensor ausgebildet ist.

4.  Pulverfördereinrichtung nach Patentanspruch 1 oder 2,
    bei der der Sensor (210) als optischer Sensor oder als Dichte-Sensor oder als Mikrowellensensor ausgebildet ist.

5.  Pulverfördereinrichtung nach einem der vorherigen Patentansprüche,
    bei der eine Regeleinheit (230) vorgesehen ist, die dazu dient, die Abweichung zwischen der Soll-Öffnungsdauer (Tsoll) und der Ist-Öffnungsdauer (Tist) zu minimieren.

6.  Pulverfördereinrichtung nach einem vorherigen Patentansprüche,

    - bei der der Pulverförderer (100) einen weiteren Pulverauslasskanal (51.2) aufweist,
    - bei der ein weiteres Pulverauslassventil (13.2) vorgesehen ist, um den weiteren Pulverauslasskanal (51.2) zu öffnen oder zu verschliessen, und
    - bei der ein weiterer Sensor (210.2) zur Ermittlung der Ist-Öffnungsdauer (Tist) des weiteren Pulverauslassventils (13.2) vorgesehen ist.

7.  Pulverfördereinrichtung nach Patentanspruch 6,
    bei der die Auswerteeinheit (220) auch zur Ermittlung der Abweichung zwischen der Soll-Öffnungsdauer (Tsoll) des weiteren Pulverauslassventils (13.2) und der Ist-Öffnungsdauer (Tist) des weiteren Pulverauslassventils (13.2) vorgesehen ist.

8.  Pulverfördereinrichtung nach Patentanspruch 6 oder 7,
    bei der ein weiterer Sollwertgeber (200.2) zur Vorgabe einer Soll-Öffnungsdauer (Tsoll) des weiteren Pulverauslassventils (13.2) vorgesehen ist.

9.  Pulverfördereinrichtung nach einem der vorherigen Patentansprüche 6 bis 8,
    bei die Auswerteeinheit (220) zudem dazu vorgesehen ist, die Ist-Öffnungsdauer (Tsoll) des Pulverauslassventils (13) mit der Ist-Öffnungsdauer (Tsoll) des weiteren Pulverauslassventils (13.2) zu vergleichen.

10. Pulverfördereinrichtung nach einem der vorherigen Patentansprüche,
    bei der der Pulverförderer (100) einen unter Druck setzbaren Pulverarbeitsbehälter (1) aufweist.

11. Pulverfördereinrichtung nach einem der vorherigen Patentansprüche,
    bei der der Pulverförderer (100) einen Injektor umfasst.

12. Pulverfördereinrichtung nach einem der vorherigen Patentansprüche 1 - 10,
    bei der der Pulverförderer (100) eine Dichtstromförderpumpe umfasst.

13. Pulverfördereinrichtung nach einem der vorherigen Patentansprüche,
    bei der das Pulverauslassventil (13) als Schlauchquetsche ausgebildet ist.

14. Pulverbeschichtungsanlage mit einer Pulverfördereinrichtung (110) nach einem der vorherigen Patentansprüche,
    bei der ein Pulverapplikator (4) vorgesehen ist, der über eine Pulverleitung (40) mit der Pulverfördereinrichtung (110) verbunden ist.

**Claims**

1. A powder conveying device for coating powder,

   - wherein a powder conveyor (100) comprising a powder outlet duct (51.1) is provided,
   - wherein a powder outlet valve (13) is provided for opening or for closing the powder outlet duct (51.1),
   - wherein a setpoint value generator(200) for specifying a setpoint opening period (Tsoll) of the powder outlet valve (13) is provided,

   **characterized in that**

   - a sensor (210) for determining the actual opening period (Tist) of the powder outlet valve (13) is provided, and that
   - an evaluation unit (220) for determining the deviation ($\Delta T$) between the setpoint opening period (Tsoll) and the actual opening period (Tist) is provided.

2. The powder conveying device according to claim 1,
   wherein the sensor (210) is arranged on the outlet side of the valve (13).

3. The powder conveying device according to claim 1 or 2,
   wherein the sensor (210) is formed as influence sensor.

4. The powder conveying device according to claim 1 or 2,
   wherein the sensor (210) is formed as optical sensor or as density sensor or as microwave sensor.

5. The powder conveying device according to any one of the preceding claims,
   wherein a regulating unit (230) is provided, which serves the purpose of minimizing the deviation between the setpoint opening period (Tsoll) and the actual opening period (Tist).

6. The powder conveying device according to any one of the preceding claims,

   - wherein the powder conveyor (100) has a further powder outlet duct (51.2),
   - wherein a further powder outlet valve (13.2) is provided for opening or for closing the further powder outlet duct (51.2), and
   - wherein a further sensor (210.2) for determining the actual opening period (Tist) of the further powder outlet valve (13.2) is provided.

7. The powder conveying device according to claim 6,
   wherein the evaluation unit (220) is also provided for determining the deviation between the setpoint opening period (Tsoll) of the further powder outlet valve (13.2) and the actual opening period (Tist) of the further powder outlet valve (13.2).

8. The powder conveying device according to claim 6 or 7,
   wherein a further setpoint value generator (200.2) for specifying a setpoint opening period (Tsoll) of the further powder outlet valve (13.2) is provided.

9. The powder conveying device according to any one of the preceding claims 6 to 8,
   wherein the evaluation unit (220) is additionally provided for comparing the actual opening period (Tist) of the powder outlet valve (13) to the actual opening period (Tist) of the further powder outlet valve (13.2).

10. The powder conveying device according to any one of the preceding claims,
    wherein the powder conveyor (100) has a powder working container (1), which can be pressurized.

11. The powder conveying device according to any one of the preceding claims,
    wherein the powder conveyor (100) comprises an injector.

12. The powder conveying device according to any one of the preceding claims 1 - 10,
    wherein the powder conveyor (100) comprises a dense flow conveying pump.

**13.** The powder conveying device according to any one of the preceding claims,
wherein the powder outlet valve (13) is formed as tube squeezer.

**14.** A powder coating plant comprising a powder conveying device (110) according to any one of the preceding claims,
wherein a powder applicator (4) is provided, which is connected to the powder conveying device (110) via a powder line (40).

**Revendications**

**1.** Dispositif de transport de poudre pour poudre de revêtement,

- dans lequel un alimentateur de poudre (100), doté d'un conduit de sortie de poudre (51.1), est prévu,
- dans lequel une valve de sortie de poudre (13) est prévue pour ouvrir ou fermer le conduit de sortie de poudre (51.1),
- dans lequel un émetteur de valeurs théoriques (200) est prévu pour définir une durée d'ouverture théorique (Tsoll) de la valve de sortie de poudre (13),

**caractérisé en ce que**

- un capteur (210) est prévu pour déterminer la durée d'ouverture réelle (Tist) de la valve de sortie de poudre (13), et **en ce que**
- une unité d'exploitation (220) est prévue pour déterminer l'écart ($\Delta T$) entre la durée d'ouverture théorique (Tsoll) et la durée d'ouverture réelle (Tist).

**2.** Dispositif de transport de poudre selon la revendication 1,
dans lequel le capteur (210) est disposé sur le côté sortie de la valve (13).

**3.** Dispositif de transport de poudre selon la revendication 1 ou 2,
dans lequel le capteur (210) est conçu comme capteur d'influence.

**4.** Dispositif de transport de poudre selon la revendication 1 ou 2,
dans lequel le capteur (210) est conçu comme capteur optique, comme capteur de densité ou comme capteur à micro-ondes.

**5.** Dispositif de transport de poudre selon l'une des revendications précédentes,
dans lequel une unité de régulation (230) servant à minimiser l'écart entre la durée d'ouverture théorique (Tsoll) et la durée d'ouverture réelle (Tist), est prévue.

**6.** Dispositif de transport de poudre selon l'une des revendications précédentes,

- dans lequel l'alimentateur de poudre (100) présente un autre conduit de sortie de poudre (51.2),
- dans lequel une autre valve de sortie de poudre (13.2) est prévue pour ouvrir ou fermer l'autre conduit de sortie de poudre (51.2), et
- dans lequel un autre capteur (210.2) est prévu pour déterminer la durée d'ouverture réelle (Tist) de l'autre valve de sortie de poudre (13.2).

**7.** Dispositif de transport de poudre selon la revendication 6,
dans lequel l'unité d'exploitation (220) est également prévue pour déterminer l'écart entre la durée d'ouverture théorique (Tsoll) de l'autre valve de sortie de poudre (13.2) et la durée d'ouverture réelle (Tist) de l'autre valve de sortie de poudre (13.2).

**8.** Dispositif de transport de poudre selon la revendication 6 ou 7,
dans lequel un autre émetteur de valeurs théoriques (200.2) est prévu pour définir une durée d'ouverture théorique (Tsoll) de l'autre valve de sortie de poudre (13.2).

**9.** Dispositif de transport de poudre selon l'une des revendications précédentes 6 à 8,
dans lequel l'unité d'exploitation (220) est prévue pour comparer la durée d'ouverture réelle (Tist) de la valve de sortie de poudre (13) avec la durée d'ouverture réelle (Tist) de l'autre valve de sortie de poudre (13.2).

10. Dispositif de transport de poudre selon l'une des revendications précédentes,
dans lequel l'alimentateur de poudre (100) présente un récipient de travail pour la poudre (1), pouvant être mis sous pression.

11. Dispositif de transport de poudre selon l'une des revendications précédentes,
dans lequel l'alimentateur de poudre (100) comprend un injecteur.

12. Dispositif de transport de poudre selon l'une des revendications précédentes 1 à 10,
dans lequel l'alimentateur de poudre (100) comprend une pompe de transport en phase dense.

13. Dispositif de transport de poudre selon l'une des revendications précédentes,
dans lequel la valve de sortie de poudre (13) est conçue comme système péristaltique.

14. Installation de revêtement par poudre avec un dispositif de transport de poudre (110) selon l'une des revendications précédentes,
dans lequel un applicateur de poudre (4) qui est relié au dispositif de transport de poudre (110) par un conduit de poudre (40), est prévu.

Fig. 1

Fig. 2

Fig. 3a

Fig. 3b

Fig. 3c

Fig. 4

Fig. 5

Fig. 6

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3238832 A1

- EP 1092958 B1